# FASCICULE DE BREVET EUROPEEN

(11) **EP 3 502 796 B1**
(45) Date de publication et mention de la délivrance du brevet: **20.05.2020**
(21) Numéro de dépôt: 17209138.1
(22) Date de dépôt: 20.12.2017
(51) Int. Cl.: G04C 3/06, G04C 10/00

(54) **PIECE D'HORLOGERIE COMPRENANT UN OSCILLATEUR MECANIQUE ASSOCIE A UN SYSTEME DE REGULATION**
UHRWERKSANORDNUNG, DIE EINEN MECHANISCHEN OSZILLATOR UMFASST, DER MIT EINER EINSTELLVORRICHTUNG VERBUNDEN IST
TIMEPIECE COMPRISING A MECHANICAL OSCILLATOR ASSOCIATED WITH A CONTROL SYSTEM

(43) Date de publication de la demande: 26.06.2019
(73) Titulaire: The Swatch Group Research and Development Ltd, 2074 Marin (CH)
(72) Inventeur: TOMBEZ, Lionel, 2022 Bevaix (CH)
(74) Mandataire: ICB SA

(56) Documents cités:
- EP-A1- 1 241 538
- US-A1- 2013 051 191

## Description

### Domaine technique

La présente invention concerne une pièce d'horlogerie comprenant un oscillateur mécanique associé à un système de régulation de sa fréquence moyenne. La régulation est du type électronique, c'est-à-dire que le système de régulation comprend un circuit électronique relié à un oscillateur auxiliaire qui est agencé pour fournir un signal d'horloge électrique de grande précision. Le système de régulation est agencé pour corriger une dérive temporelle éventuelle de l'oscillateur mécanique relativement à l'oscillateur auxiliaire.

En particulier, l'oscillateur mécanique comprend un résonateur mécanique formé par un balancier-spiral et un dispositif d'entretien formé par un échappement classique, par exemple à ancre suisse. L'oscillateur auxiliaire est formé notamment par un résonateur à quartz ou par un résonateur intégré dans le circuit électronique de régulation.

### Arrière-plan technologique

Des mouvements formant des pièces d'horlogerie telles que définies dans le domaine de l'invention ont été proposés dans quelques documents antérieurs. Le brevet CH 597 636, publié en 1977, propose un tel mouvement en référence à sa figure 3. Le mouvement est équipé d'un résonateur formé par un balancier-spiral et d'un dispositif d'entretien classique comprenant une ancre et une roue d'échappement en liaison cinématique avec un barillet muni d'un ressort. Ce mouvement horloger comprend un système de régulation de la fréquence de l'oscillateur mécanique. Ce système de régulation comprend un circuit électronique et un ensemble électromagnétique formé d'une bobine plate, agencée sur un support sous la serge du balancier, et de deux aimants montés sur le balancier et agencés proches l'un de l'autre de manière à passer tous deux au-dessus de la bobine lorsque l'oscillateur est activé.

Le circuit électronique comprend une base de temps comprenant un résonateur à quartz et servant à générer un signal de fréquence de référence FR, cette fréquence de référence étant comparée avec la fréquence FG de l'oscillateur mécanique. La détection de la fréquence FG est réalisée via les signaux électriques générés dans la bobine par la paire d'aimants. Le circuit de régulation est agencé pour pouvoir engendrer momentanément un couple de freinage via un couplage magnétique aimant-bobine et une charge commutable reliée à la bobine. Le document CH 597 636 donne l'enseignement suivant : « Le résonateur ainsi formé doit présenter une fréquence d'oscillation variable selon l'amplitude de part et d'autre de la fréquence FR (défaut d'isochronisme) ». On enseigne donc que l'on obtient une variation de la fréquence d'oscillation d'un résonateur non isochrone en variant son amplitude d'oscillation. Une analogie est faîte entre l'amplitude d'oscillation d'un résonateur et la vitesse angulaire d'une génératrice comprenant un rotor muni d'aimants et agencé dans un rouage du mouvement horloger pour en réguler sa marche. Comme un couple de freinage diminue la vitesse de rotation d'une telle génératrice et ainsi sa fréquence de rotation, il est ici seulement envisagé de pouvoir diminuer la fréquence d'oscillation d'un résonateur obligatoirement non isochrone par l'application d'un couple de freinage diminuant son amplitude d'oscillation.

Pour effectuer une régulation électronique de la fréquence de la génératrice, respectivement de l'oscillateur mécanique, il est prévu dans un mode de réalisation donné que la charge soit formée par un redresseur commutable via un transistor qui recharge une capacité d'alimentation lors des impulsions de freinage, pour récupérer l'énergie électrique afin d'alimenter le circuit électronique. L'enseignement constant donné dans le document CH 597 636 est le suivant : Lorsque FG > FR le transistor est conducteur ; on prélève alors une puissance Pa sur la génératrice / l'oscillateur. Lorsque FG < FR, le transistor est non-conducteur ; on ne prélève donc plus d'énergie sur la génératrice / l'oscillateur. En d'autres termes, on régule seulement lorsque la fréquence de la génératrice / de l'oscillateur est supérieure à la fréquence de référence FR. Cette régulation consiste à freiner la génératrice / l'oscillateur dans le but de diminuer sa fréquence FG. Ainsi, dans le cas de l'oscillateur mécanique, l'homme du métier comprend qu'une régulation n'est possible que lorsque le ressort de barillet est fortement armé et que la fréquence d'oscillation libre (fréquence propre) de l'oscillateur mécanique est supérieure à la fréquence de référence FR, comme résultat d'un défaut d'isochronisme voulu de l'oscillateur mécanique sélectionné. On a donc un double problème, à savoir l'oscillateur mécanique est sélectionné pour ce qui est normalement un défaut dans un mouvement mécanique et la régulation électronique n'est fonctionnelle que lorsque la fréquence propre de cet oscillateur est supérieure à une fréquence nominale.

La demande de brevet EP 1 521 142 traite également de la régulation électronique d'un balancier-spiral. Le système de régulation proposé dans ce document est similaire dans son fonctionnement général à celui du brevet CH 597 636.

La demande de brevet EP 1 241 538 enseigne que le moment du freinage de l'oscillateur mécanique, au cours d'une alternance d'une quelconque oscillation de ce dernier, permet soit de diminuer la valeur de la période d'oscillation en cours, soit de l'augmenter. Pour ce faire, il est prévu un ensemble électromagnétique aimants-bobines et un circuit de commande qui est agencé pour rendre conducteur ou non les bobines durant certains intervalles de temps déterminés. De manière générale, un freinage de l'oscillateur mécanique, par la génération d'une puissance électrique dans les bobines lors d'un couplage aimants-bobines, au cours d'une période d'oscillation engendre soit une augmentation de la période correspondante lorsque ce freinage intervient avant le passage du résonateur mécanique par son point neutre (position de repos), soit une diminution de la période correspondante lorsque ce freinage intervient après le passage du résonateur mécanique par son point neutre. Cette constatation est remarquable au vu de l'enseignement qui prévalait à l'époque.

Concernant l'implémentation d'une régulation électronique tirant profit de la constatation susmentionnée, le document EP 1 241 538 propose deux réalisations. Dans ces deux réalisations, il est prévu un système piézo-électrique associé à l'échappement pour détecter un basculement de son ancre dans chaque période d'oscillation. Grâce à un tel système de détection, il est prévu, d'une part, de comparer la période d'oscillation avec une période de référence, définie par un oscillateur à quartz, pour déterminer si la marche de la pièce d'horlogerie présente une avance ou un retard et, d'autre part, de déterminer dans une alternance sur deux le passage de l'oscillateur mécanique par son point neutre. Dans la première réalisation, selon que la dérive temporelle correspond à une avance ou un retard, il est prévu de rendre conducteur les bobines durant un certain intervalle de temps respectivement avant ou après le passage par la position neutre de l'oscillateur mécanique dans une alternance. En d'autres termes, il est prévu ici de court-circuiter les bobines avant ou après le passage par la position neutre selon que la régulation requière respectivement une augmentation ou une diminution de la période d'oscillation.

Dans la deuxième réalisation, il est prévu d'alimenter le système de régulation en prenant périodiquement de l'énergie à l'oscillateur mécanique via l'ensemble électromagnétique. A cet effet, les bobines sont reliées à un redresseur qui est agencé pour recharger un condensateur (capacité de stockage), lequel sert de source d'alimentation pour le circuit électronique. L'ensemble électromagnétique est celui donné aux figures 2 et 4 et le circuit électronique est représenté schématiquement à la Figure 5 de ce document. Les seules indications données pour le fonctionnement du système de régulation sont les suivantes : 1) les bobines sont rendues conductrices durant des intervalles de temps constants qui sont centrés sur des passages respectifs du résonateur mécanique (balancier-spiral) par sa position neutre (position médiane des alternances) ; 2) durant ces intervalles de temps un courant induit est redressé et stocké dans le condensateur ; et 3) au cours desdits intervalles de temps, la période d'oscillation du balancier-spiral peut être régulée efficacement en ajustant la valeur de la puissance générée par le courant induit, sans autres précisions données.

On peut penser que le choix d'intervalles de conduction des bobines centrés sur les positions neutres du résonateur mécanique a pour objectif de ne pas induire de dérive temporelle parasite dans l'oscillateur mécanique en prélevant de l'énergie à ce dernier pour alimenter le circuit électronique. En rendant conductrices les bobines pour une même durée avant et après le passage par la position neutre, l'auteur pense peut-être équilibrer l'effet d'un freinage précédant un tel passage par la position neutre avec l'effet d'un freinage suivant ce passage pour ainsi ne pas modifier la période d'oscillation en l'absence d'un signal de correction du circuit de régulation intervenant suite à la mesure d'une dérive temporelle. On peut fortement douter qu'il y parvienne avec l'ensemble électromagnétique divulgué et un redresseur classique relié à une capacité de stockage. Premièrement, la recharge de cette capacité de stockage dépend de sa tension initiale au début d'un intervalle de temps donné. Ensuite, la tension induite et le courant induit dans les bobines varient en intensité avec la vitesse angulaire du balancier-spiral, cette intensité diminuant lorsqu'on s'éloigne d'une position neutre où la vitesse angulaire est maximale. L'ensemble électromagnétique divulgué permet de déterminer la forme du signal de tension induite / de courant induit. Bien que la position angulaire des aimants relativement aux bobines pour la position neutre (position de repos) ne soit pas donnée et qu'on ne peut pas déduire un enseignement sur la phase du signal, on peut en déduire que la recharge de la capacité de stockage aura lieu normalement en majeure partie avant le passage par la position neutre. Ainsi, il en résulte un freinage qui n'est pas symétrique relativement à la position neutre et un retard parasite dans la marche de pièce d'horlogerie. Finalement, quant à l'ajustement de la puissance induite au cours des intervalles de temps constants prévus pour réguler la marche de la pièce d'horlogerie, rien n'est indiqué. On ne comprend pas comment un tel ajustement est effectué, aucun enseignement étant donné à ce sujet.

### Résumé de l'invention

Un objectif général, dans le cadre du développement ayant conduit à la présente invention, était de réaliser une pièce d'horlogerie, comprenant un mouvement mécanique avec un oscillateur mécanique et un système de régulation électronique de cet oscillateur mécanique, pour laquelle il ne soit pas nécessaire de dérégler initialement l'oscillateur mécanique pour qu'il avance, de manière à avoir ainsi une pièce d'horlogerie qui a la précision d'un oscillateur électronique auxiliaire (notamment muni d'un résonateur à quartz) lorsque le système de régulation est fonctionnel et, dans le cas contraire, la précision de l'oscillateur mécanique correspondant au meilleur standard. En d'autres termes, on cherche à adjoindre une régulation électronique à un mouvement mécanique par ailleurs réglé le plus précisément possible de sorte qu'il reste fonctionnel, avec la meilleure marche possible, lorsque la régulation électronique est non active.

La présente invention a pour objectif premier de fournir une pièce d'horlogerie du type décrit précédemment, dans laquelle le système de régulation consomme relativement peu d'énergie électrique et permette ainsi une auto-alimentation efficace de ce système de régulation par une moindre énergie électrique prise à l'oscillateur mécanique de la pièce d'horlogerie, quelle que soit la grandeur d'une dérive temporelle à corriger dans une plage de valeurs qu'il est prévu de pouvoir corriger.

Un autre objectif est de fournir une pièce d'horlogerie du type décrit précédemment qui soit capable, pour un ensemble électromagnétique défini, de fournir une énergie électrique d'alimentation et en continu une tension d'alimentation qui soient suffisantes pour assurer le bon fonctionnement du système de régulation, notamment en l'absence d'une correction d'une dérive temporelle.

Un objectif particulier est de fournir une telle pièce d'horlogerie qui soit capable, pour un ensemble électromagnétique défini, de fournir en continu une tension électrique d'alimentation qui demeure sensiblement maximale quelle que soit la correction d'une dérive temporelle de cette pièce d'horlogerie effectuée par le système de régulation.

Un autre objectif particulier est d'assurer l'auto-alimentation du système de régulation sans induire une dérive temporelle parasite, en particulier en l'absence d'une correction d'une dérive temporelle, ou pour le moins de sorte qu'une telle dérive temporelle parasite éventuelle reste minime et négligeable.

A cet effet, la présente invention concerne une pièce d'horlogerie comprenant :
- un mécanisme, notamment un mécanisme d'indication de l'heure,
- un résonateur mécanique susceptible d'osciller autour d'une position neutre correspondant à son état d'énergie potentielle mécanique minimale, chaque oscillation du résonateur mécanique définissant une période d'oscillation et présentant deux alternances successives chacune entre deux positions extrêmes qui définissent chacune l'amplitude d'oscillation du résonateur mécanique, chaque alternance présentant un passage du résonateur mécanique par sa position neutre (position de repos / position d'énergie mécanique minimale) à un instant médian et étant constituée d'une première demi-alternance entre un instant initial de cette alternance et son instant médian et d'une seconde demi-alternance entre cet instant médian et un instant final de cette alternance.
- un dispositif d'entretien du résonateur mécanique formant avec ce dernier un oscillateur mécanique qui définit la cadence de la marche dudit mécanisme,
- un transducteur électromécanique agencé pour pouvoir convertir de la puissance mécanique de l'oscillateur mécanique en puissance électrique, en particulier lorsque le résonateur mécanique oscille avec une amplitude comprise dans une plage de fonctionnement utile, ce transducteur électromagnétique étant formé par un ensemble électromagnétique comprenant au moins une bobine, montée sur un élément parmi l'ensemble mécanique constitué du résonateur mécanique et de son support, et au moins un aimant, monté sur l'autre élément de cet ensemble mécanique, l'ensemble électromagnétique étant agencé de manière à pouvoir fournir un signal de tension induite entre les deux bornes de sortie du transducteur électromécanique lorsque le résonateur mécanique oscille avec une amplitude comprise dans ladite plage de fonctionnement utile,
- un convertisseur électrique relié aux deux bornes de sortie du transducteur électromécanique de manière à pouvoir recevoir de ce dernier un courant induit, ce convertisseur électrique comprenant une unité d'alimentation agencée pour pouvoir accumuler de l'énergie électrique fournie par le transducteur électromécanique, ce transducteur électromécanique et le convertisseur électrique formant ensemble un dispositif de freinage du résonateur mécanique,
- une charge connectée ou susceptible d'être régulièrement connectée à l'unité d'alimentation de manière à pouvoir être alimentée par cette unité d'alimentation,
- un dispositif de régulation de la fréquence de l'oscillateur mécanique, ce dispositif de régulation comprenant un oscillateur auxiliaire et un dispositif de mesure agencé pour pouvoir détecter une dérive temporelle éventuelle de l'oscillateur mécanique relativement à l'oscillateur auxiliaire, le dispositif de régulation étant agencé pour pouvoir déterminer si la dérive temporelle mesurée correspond à au moins une certaine avance.

La pièce d'horlogerie selon l'invention est caractérisée en ce que :
- l'unité d'alimentation comprend une première capacité d'alimentation et une deuxième capacité d'alimentation, agencées tous deux pour alimenter ladite charge, et le convertisseur électrique est formé par un premier circuit d'accumulation d'énergie électrique, qui comprend la première capacité d'alimentation et qui est agencé pour pouvoir recharger cette première capacité d'alimentation seulement avec une tension ayant une première polarité en entrée du convertisseur électrique, et par un deuxième circuit d'accumulation d'énergie électrique qui comprend la deuxième capacité d'alimentation et qui est agencé pour pouvoir recharger cette deuxième capacité d'alimentation seulement avec une tension ayant une deuxième polarité, opposée à la première polarité, en entrée du convertisseur électrique, le dispositif de freinage étant agencé de manière qu'une quantité d'énergie électrique fournie lors d'une recharge à la première capacité d'alimentation, respectivement à la deuxième capacité d'alimentation est d'autant plus grande que le niveau de tension de cette première capacité d'alimentation, respectivement de cette deuxième capacité d'alimentation est bas,
- le dispositif de freinage est agencé de manière que le signal de tension induite présente dans chaque période d'oscillation de l'oscillateur mécanique, lorsque l'amplitude d'oscillation est comprise dans la plage utile de fonctionnement, au moins un premier intervalle dans lequel ce signal de tension induite a la première polarité et au moins un deuxième intervalle dans lequel ce signal de tension induite a la deuxième polarité,
- le dispositif de freinage est en outre agencé de manière que, pour chaque oscillation du transducteur mécanique avec une amplitude dans la plage de fonctionnement utile, une recharge d'une des première et deuxième capacités d'alimentation, le cas échéant, intervienne en majeure partie globalement dans les deux premières demi-alternances et une recharge de l'autre de ces première et deuxième capacités d'alimentation, le cas échéant, intervienne en majeure partie globalement dans les deux secondes demi-alternances,

- le dispositif de régulation comprend une pompe de charge agencée pour pouvoir transférer sur commande des charges électriques de ladite une des première et deuxième capacités d'alimentation à ladite autre, et
- le dispositif de régulation comprend en outre un circuit logique de commande de la pompe de charge qui reçoit en entrée un signal de mesure fourni par le dispositif de mesure et qui est agencé de manière à activer la pompe de charge pour qu'elle effectue un transfert d'une première charge électrique de ladite une des première et deuxième capacités d'alimentation à ladite autre lorsque la dérive temporelle mesurée correspond à ladite au moins une certaine avance.

Le transfert d'une première charge électrique est prévu pour augmenter, au moins dans une période d'oscillation suivant un tel transfert, la recharge de ladite une des première et deuxième capacités d'alimentation et/ou diminuer la recharge de ladite autre de ces première et deuxième capacités d'alimentation relativement au cas hypothétique où le transfert de la première charge électrique n'aurait pas lieu. Si lors d'une première séquence d'un procédé de régulation selon l'invention un tel résultat n'est pas obtenu, cette première séquence est répétée jusqu'à obtenir l'effet susmentionné. On introduit un déséquilibre entre la recharge de la première capacité d'alimentation et la recharge de la deuxième capacité d'alimentation, au profit de ladite une des première et deuxième capacités d'alimentation, relativement à une situation intervenant dans une phase stable de non correction, c'est-à-dire sans correction d'une dérive temporelle. En d'autres termes, on agit sélectivement sur la recharge des première et deuxième capacités d'alimentation pour favoriser une recharge de celles-ci dans les premières demi-alternances d'au moins une oscillation et par conséquent diminuer momentanément la fréquence instantanée de l'oscillateur mécanique. Dans une variante préférée, les première et deuxième capacités d'alimentation ont sensiblement une même valeur de capacité et sont agencées pour alimenter conjointement la charge.

Dans un mode de réalisation principal de l'invention, le dispositif de régulation est également agencé pour pouvoir déterminer si la dérive temporelle mesurée correspond à au moins un certain retard. La pièce d'horlogerie est alors caractérisée en outre par les éléments spécifiques suivant :
- la pompe de charge est également agencée pour pouvoir transférer sur commande momentanément des charges électriques de ladite autre des première et deuxième capacités d'alimentation vers ladite une de ces première et deuxième capacités d'alimentation ;
- le circuit logique de commande de la pompe de charge est agencé de manière à activer la pompe de charge pour qu'elle effectue un transfert d'une deuxième charge électrique de ladite autre des première et deuxième capacités d'alimentation vers ladite une de ces première et deuxième capacités d'alimentation lorsque la dérive temporelle mesurée correspond audit au moins un certain retard.

Dans ce dernier cas, le transfert d'une deuxième charge électrique est prévu pour augmenter, au moins dans une période d'oscillation suivant un tel transfert, la recharge de ladite autre des première et deuxième capacités d'alimentation ou/et diminuer la recharge de ladite une de ces première et deuxième capacités d'alimentation relativement au cas hypothétique où ledit transfert de cette deuxième charge électrique n'aurait pas lieu. A nouveau, si lors d'une deuxième séquence du procédé de régulation selon l'invention un tel résultat n'est pas obtenu, cette deuxième séquence est répétée jusqu'à obtenir l'effet susmentionné. On introduit ainsi un déséquilibre entre la recharge de la première capacité d'alimentation et la recharge de la deuxième capacité d'alimentation, au profit de ladite autre des première et deuxième capacités d'alimentation, relativement à une situation intervenant dans une phase stable de non correction. En d'autres termes, on agit sélectivement sur la recharge des première et deuxième capacités d'alimentation pour favoriser une recharge de celles-ci dans les secondes demi-alternances d'au moins une oscillation et par conséquent augmenter momentanément la fréquence instantanée de l'oscillateur mécanique.

La charge agencée en sortie du convertisseur électrique comprend notamment le dispositif de régulation qui est alimenté par les première et deuxième capacités d'alimentation agencées de manière à délivrer une tension d'alimentation correspondant à l'addition des tensions respectives de ces première et deuxième capacités d'alimentation.

Grâce aux caractéristiques du mouvement horloger selon l'invention, il est possible de réguler, via un oscillateur auxiliaire comprenant par exemple un résonateur à quartz, un oscillateur mécanique par ailleurs très précis, qu'il présente momentanément une fréquence légèrement trop haute ou trop basse. La régulation de la fréquence consiste à varier momentanément la fréquence instantanée de l'oscillateur mécanique pour que sa fréquence moyenne sur la durée soit égale à celle de l'oscillateur auxiliaire. C'est une régulation très précise qui élimine toute dérive temporelle de la marche du mécanisme en question.

Dans un mode de réalisation préféré de l'invention, le dispositif de freinage, en particulier l'ensemble électromagnétique du transducteur électromécanique, est agencé de manière que, dans chaque période d'oscillation de l'oscillateur mécanique, un premier lobe du signal de tension induite présente une tension positive maximale pour cette période d'oscillation et un deuxième lobe de ce signal de tension induite présente une tension négative maximale pour cette période d'oscillation, et de manière que le premier lobe de tension et le deuxième lobe de tension interviennent, si ladite première polarité est positive alors que ladite deuxième polarité est négative, respectivement dans une première demi-alternance et une seconde demi-alternance d'une et/ou l'autre des deux alternances de l'oscillation considérée et, si ladite première polarité est négative alors que ladite deuxième polarité est positive, respectivement dans une seconde demi-alternance et une première demi-alternance d'une et/ou l'autre des deux alternances de cette oscillation considérée.

Par 'lobe de tension', on comprend une impulsion de tension qui est située entièrement en-dessus ou entièrement en-dessous d'une valeur nulle (définissant une tension zéro), c'est-à-dire une variation de tension dans un certain intervalle de temps avec soit une tension positive dont la valeur positive monte puis redescend, soit une tension négative dont la valeur négative descend puis remonte.

Dans une variante générale, l'ensemble électromagnétique comprend au moins une bobine et une structure aimantée formée d'au moins un aimant et présentant au moins une paire de pôles magnétiques, de polarités opposées, générant chacun un flux magnétique en direction d'un plan général de la bobine, cette paire de pôles magnétiques étant agencée de manière que leurs flux magnétiques respectifs traversent la bobine avec un décalage temporel mais avec au moins en partie une simultanéité du flux magnétique entrant dans la bobine et du flux magnétique sortant de cette bobine, de manière à former les premier et deuxième lobes de tension.

Dans un mode de réalisation particulier, l'ensemble électromagnétique de la pièce d'horlogerie comprend une première paire d'aimants bipolaires et une première bobine ainsi qu'une deuxième paire d'aimants bipolaires et une deuxième bobine, chaque paire d'aimants bipolaires ayant deux axes d'aimantation respectifs avec des polarités opposées et une ouverture angulaire sensiblement identique, l'axe médian de la deuxième paire d'aimants bipolaires et la deuxième bobine présentant un décalage angulaire non nul qui est sensiblement identique à celui prévu entre la première paire d'aimants bipolaires et la première bobine. L'ensemble électromagnétique est agencé de manière que, lorsque le résonateur est au repos, une des première et deuxième paires d'aimants bipolaires est située à égale distance angulaire des première et deuxième bobines, cet ensemble électromagnétique comprenant soit une pluralité de bobines agencées de manière qu'un premier axe médian entre les première et deuxième paires d'aimants bipolaires définit un axe de symétrie pour cette pluralité de bobines, soit une pluralité de paires d'aimants bipolaires agencées de manière qu'un deuxième axe médian entre les première et deuxième bobines définit un axe de symétrie pour cette pluralité de paires d'aimants bipolaires. Finalement, les divers éléments de l'ensemble électromagnétique sont agencés de manière que les tensions induites respectives dans les bobines en question s'additionnent constructivement.

Dans une première variante préférée, le décalage angulaire est sensiblement égal à 90°, l'ensemble électromagnétique comprenant seulement deux bobines, à savoir les première et deuxième bobines susmentionnées qui sont décalées angulairement de 180°, et deux paires d'aimants bipolaires montées sur un balancier du résonateur mécanique, à savoir les première et deuxième paires d'aimants susmentionnées aussi décalées angulairement de 180°.

Dans une deuxième variante préférée, il est prévu les première et deuxième bobines susmentionnées qui sont décalées angulairement de 120° et trois paires d'aimants bipolaires montées sur le balancier du résonateur mécanique avec des décalages angulaires de 120° entre elles (c'est-à-dire entre une paire d'aimants et chacune des deux autres paires d'aimants). Les deux bobines sont avantageusement agencées dans une zone périphérique du mouvement horloger incorporant l'oscillateur mécanique qui est positionné classiquement de manière décentrée dans ce mouvement horloger. On notera que les trois paires d'aimants agencées radialement, à même distance de l'axe de rotation, sur un balancier pivoté n'engendrent pas de déséquilibre de poids, le centre d'inertie de ces trois paires d'aimants identiques étant positionné sur l'axe de rotation. Cette deuxième variante est avantageuse.

Dans une troisième variante, il est prévu, en plus des éléments mentionnés pour la deuxième variante, une troisième bobine également décalée de 120° relativement à chacune des deux autres bobines. On notera que cette dernière variante est plus encombrante que les deux variantes précédentes et peut engendrer des problèmes de construction du mouvement horloger mécanique incorporant l'oscillateur mécanique.

### Brève description des dessins

L'invention sera décrite ci-après de manière plus détaillée à l'aide de dessins annexés, donnés à titre d'exemples nullement limitatifs, dans lesquels :
- La Figure 1 est une vue générale de dessus d'une pièce d'horlogerie selon l'invention,
- La Figure 2 est une vue partielle et agrandie de la pièce d'horlogerie de la Figure 1, montrant un premier mode de réalisation d'un transducteur électromagnétique qui forme un système de régulation incorporé dans cette pièce d'horlogerie,

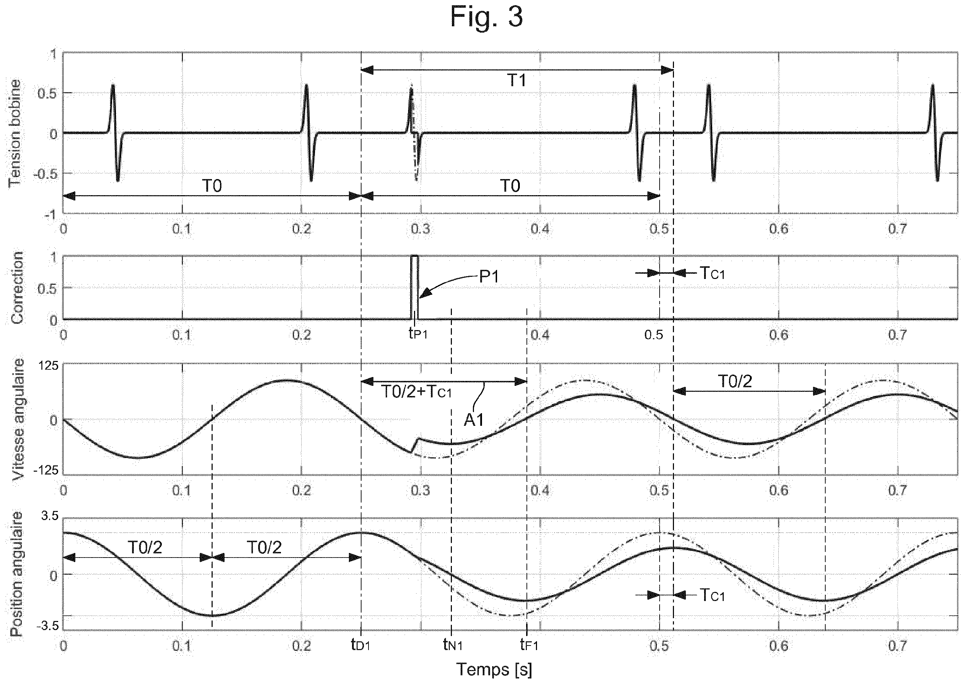

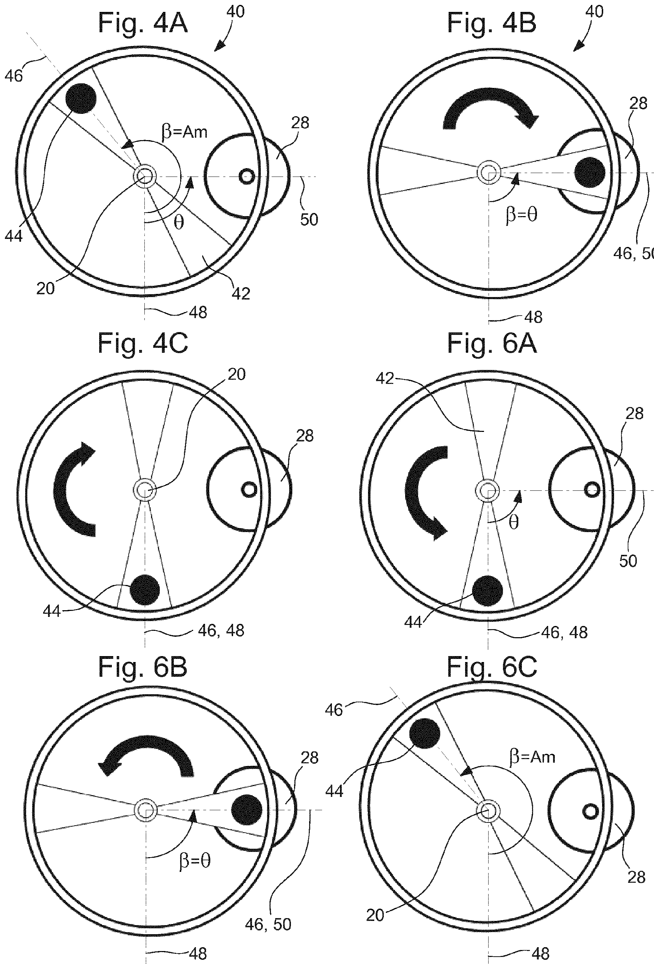

- La Figure 3 représente, pour un ensemble électromagnétique d'un transducteur électromagnétique simplifié donné aux Figures 4A à 4C pour exposer des principes physiques de la régulation intervenant dans la présente invention, la tension induite dans la bobine de cet ensemble électromagnétique lorsque le balancier-spiral oscille et l'application d'une première impulsion de freinage dans une certaine alternance avant que le balancier-spiral passe par sa position neutre, ainsi que la vitesse angulaire du balancier et sa position angulaire dans un intervalle temporel dans lequel intervient la première impulsion de freinage,
- Les Figures 4A à 4C montrent, pour le transducteur électromagnétique considéré à la Figure 3, le balancier à trois instants particuliers d'une alternance de l'oscillateur mécanique au cours de laquelle la première impulsion de freinage est fournie,
- La Figure 5 est une figure similaire à celle de la Figure 3 avec l'application d'une deuxième impulsion de freinage dans une certaine alternance après que le balancier-spiral a passé par sa position neutre,
- Les Figures 6A à 6C montrent le balancier à trois instants particuliers d'une alternance de l'oscillateur mécanique au cours de laquelle la deuxième impulsion de freinage est fournie,
- La Figure 7 montre le schéma électrique d'un convertisseur électrique et d'un dispositif de régulation de l'oscillateur mécanique tels qu'agencés dans la pièce d'horlogerie de la Figure 1,
- La Figure 8 montre le circuit électronique d'une pompe de charge formant le dispositif de régulation représenté à la Figure 7,
- La Figure 9 représente divers signaux électriques intervenant dans le schéma électrique de la Figure 7,
- La Figure 10 est un organigramme du mode de régulation de la marche de la pièce d'horlogerie selon l'invention,
- La Figure 11 représente les signaux de tension aux bornes des deux capacités d'alimentation du convertisseur électrique de la Figure 7, la tension d'alimentation qui en résulte et les impulsions de courant induit aux bornes de la bobine du transducteur électromagnétique pour une première variante de commande de la pompe de charge,
- La Figure 12 est similaire à la Figure 11, mais pour une deuxième variante de commande de la pompe de charge,
- La Figure 13 est similaire à la Figure 11, mais pour une troisième variante de commande de la pompe de charge,
- La Figure 14 montre un deuxième mode de réalisation d'un transducteur électromécanique incorporé dans une pièce d'horlogerie selon l'invention,
- Les Figures 15A à 15C représentent divers signaux de tension induite fournis par le transducteur électromécanique de la Figure 14.

### Description détaillée de l'invention

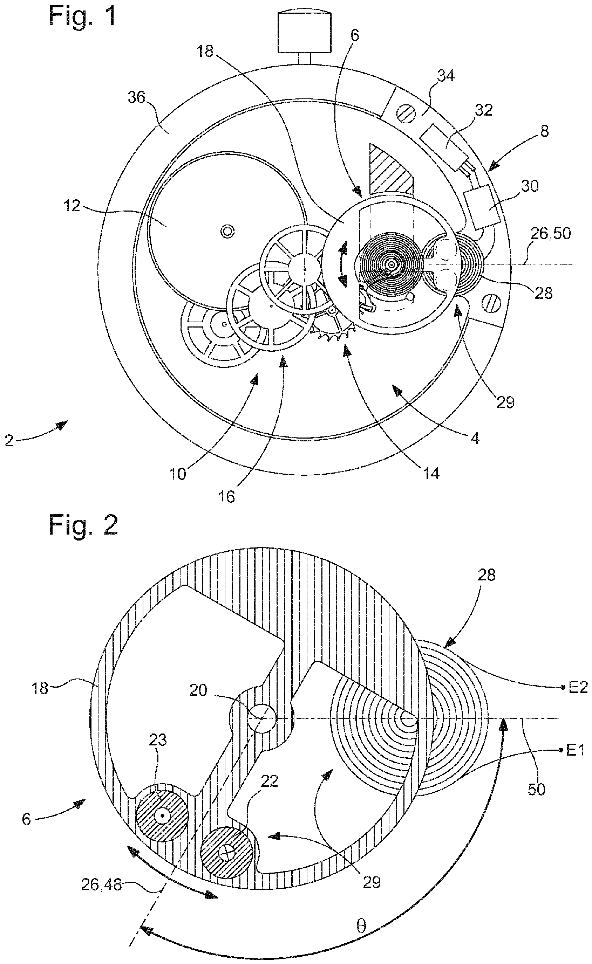

En référence aux Figures 1 et 2, on décrira ci-après une pièce d'horlogerie objet de la présente invention. La Figure 1 est une vue en plan partielle d'une pièce d'horlogerie 2 comprenant un mouvement mécanique 4, équipé d'un résonateur mécanique 6, et un système de régulation 8. Les moyens d'entretien 10 du résonateur mécanique sont classiques. Ils comprennent un barillet 12 avec un ressort-moteur, un échappement 14 formé d'une roue d'échappement et d'une ancre à palettes, ainsi qu'un rouage intermédiaire 16 reliant cinématiquement le barillet à la roue d'échappement. Le résonateur 6 comprend un balancier 18 et un ressort-spiral usuel, le balancier étant monté pivotant autour d'un axe de rotation 20 entre une platine et un pont. Le résonateur mécanique 6 et les moyens d'entretien 10 (aussi nommés moyens d'excitation) forment ensemble un oscillateur mécanique. On notera que, en général, on ne retient dans la définition d'un oscillateur mécanique horloger que l'échappement comme moyen d'entretien / moyen d'excitation de cet oscillateur mécanique, la source d'énergie et un train d'engrenage intermédiaire étant considérés séparément. Le balancier-spiral oscille autour de l'axe 20 lorsqu'il reçoit des impulsions mécaniques de l'échappement dont la roue d'échappement est entraînée par le barillet. Le rouage 16 fait partie d'un mécanisme du mouvement horloger dont la marche est cadencée par l'oscillateur mécanique. Ce mécanisme comprend, outre le rouage 16, d'autres mobiles et des indicateurs analogiques (non représentés) reliés cinématiquement à ce rouage 16, le déplacement de ces indicateurs analogiques étant rythmé par l'oscillateur mécanique. Divers mécanismes connus de l'homme du métier peuvent être prévus, en particulier des mécanismes relatifs au temps.

La Figure 2 est une vue partielle de la Figure 1, en coupe horizontale au niveau du balancier 18, montrant deux aimants 22, 23 et une bobine 28 formant un ensemble électromagnétique 29 selon l'invention. La bobine 28 est de préférence du type galette (forme de disque ayant une épaisseur relativement petite). Elle est agencée sur la platine du mouvement horloger et comprend classiquement deux extrémités de connexion E1 et E2. De manière générale, il est prévu un ensemble électromagnétique qui comprend au moins une bobine et une structure aimantée formée d'au moins un aimant et présentant au moins une paire de pôles magnétiques, de polarités opposées, générant chacun un flux magnétique en direction d'un plan général de la bobine, cette paire de pôles magnétiques étant agencée de manière que, lorsque le résonateur mécanique oscille avec une amplitude comprise dans une plage de fonctionnement utile, leurs flux magnétiques respectifs traversent la bobine avec un décalage temporel mais avec au moins en partie une simultanéité du flux magnétique entrant et du flux magnétique sortant, de manière à former un lobe de tension central présentant une valeur de pic qui est maximale.

Dans la variante avantageuse de la Figure 2, le balancier 18 porte, de préférence dans une zone située à proximité de son diamètre extérieur défini par sa serge, une paire d'aimants bipolaires ayant des axes d'aimantation respectifs qui sont orientés axialement avec des polarités opposées. Les aimants sont agencés proches l'un de l'autre, à une distance permettant une addition de leurs interactions respectives avec la bobine 28 pour ce qui concerne la tension induite dans celle-ci (plus précisément pour la génération du lobe de tension central susmentionné). Dans une variante non représentée, on peut agencer un seul aimant bipolaire avec son axe d'aimantation parallèle au plan du balancier et orienté tangentiellement à un cercle géométrique centré sur l'axe de rotation 20. Dans ce dernier cas, le signal de tension induite dans la bobine peut présenter sensiblement un même profil que pour la paire d'aimants décrite ci-avant, mais avec une amplitude moindre étant donné que seule une partie du flux magnétique de l'aimant traverse la bobine lorsque le résonateur oscille. Toutefois, des éléments de conduction du flux magnétique peuvent être associés au seul aimant pour diriger son flux magnétique substantiellement en direction du plan général de la bobine. On remarquera qu'il est préférable de confiner le flux magnétique de l'aimant ou des aimants portés par le balancier à l'aide d'un blindage formé par des parties du balancier, en particulier par des parties magnétiques agencées des deux côtés des aimants selon la direction axiale de manière que la bobine soit partiellement située entre ces deux parties magnétiques.

Le balancier 18 définit un demi-axe 26, depuis son axe de rotation 20 et perpendiculairement à ce dernier, qui passe au milieu de la paire d'aimants 22 et 23. Lorsque le balancier-spiral est dans sa position de repos, le demi-axe 26 définit une position neutre (position angulaire de repos du balancier-spiral correspondant à un angle zéro) autour de laquelle le balancier-spiral peut osciller à une certaine fréquence, notamment à une fréquence libre F0 correspondant à la fréquence d'oscillation de l'oscillateur mécanique non soumis à des couples de force externes (autres que celui fourni périodiquement via l'échappement). A la Figure 2, le résonateur mécanique 6 (représenté sans son spiral qui est situé au-dessus du plan de coupe) est représenté dans sa position neutre, correspondant à un état d'énergie mécanique potentielle minimale du résonateur. On remarque que, dans la position neutre, le demi-axe 26 définit un demi-axe de référence 48 qui est décalé angulairement d'un angle θ relativement au demi-axe fixe 50 qui intercepte l'axe de rotation 20 et l'axe central de la bobine 28. En d'autres termes, en projection dans le plan général du balancier, le centre de la bobine 28 présente un décalage angulaire θ relativement au demi-axe de référence 48. A la Figure 2, ce décalage angulaire vaut 120° en valeur absolue. De préférence, le décalage angulaire θ est compris entre 30° et 120° en valeur absolue.

Chaque oscillation du résonateur mécanique définit une période d'oscillation et elle présente une première alternance suivie d'une deuxième alternance chacune entre deux positions extrêmes définissant l'amplitude d'oscillation du résonateur mécanique (à noter que l'on considère ici le résonateur oscillant et donc l'oscillateur mécanique dans son ensemble, l'amplitude d'oscillation du balancier-spiral étant définie entre autres choses par les moyens d'entretien). Chaque alternance présente un passage du résonateur mécanique par sa position neutre à un instant médian et une certaine durée entre un instant initial et un instant final qui sont définis respectivement par les deux positions extrêmes occupées par le résonateur mécanique respectivement au début et à la fin de cette alternance. Chaque alternance est constituée d'une première demi-alternance se terminant audit instant médian et d'une seconde demi-alternance débutant à cet instant médian.

Le système 8 de régulation de la fréquence de l'oscillateur mécanique comprend un circuit électronique 30 et un oscillateur auxiliaire 32, cet oscillateur auxiliaire comprenant un circuit d'horloge et par exemple un résonateur à quartz relié à ce circuit d'horloge. On notera que dans une variante, l'oscillateur auxiliaire est intégré au moins partiellement dans le circuit électronique. Le système de régulation comprend en outre l'ensemble électromagnétique 29 décrit précédemment, à savoir la bobine 28 qui est reliée électriquement au circuit électronique 30 et la paire d'aimants bipolaires montées sur le balancier. De manière avantageuse, les divers éléments du système de régulation 8, à l'exception de la paire d'aimants, sont agencés sur un support 34 avec lequel ils forment un module mécaniquement indépendant du mouvement horloger. Ainsi, ce module peut être assemblé ou associé au mouvement mécanique 4 que lors de leur montage dans une boîte de montre. En particulier, comme représenté à la Figure 1, le module susmentionné est fixé à un cercle d'emboîtage 36 qui entoure le mouvement horloger. On comprend que le module de régulation peut donc être associé au mouvement horloger une fois ce dernier entièrement monté et réglé, le montage et démontage de ce module pouvant intervenir sans devoir intervenir sur le mouvement mécanique lui-même.

En référence aux Figures 3 à 6C, on décrira premièrement le phénomène physique sur la base duquel se fonde le principe de régulation implémenté dans la pièce d'horlogerie selon l'invention. On considère ici une pièce d'horlogerie similaire à celle de la Figure 1, mais non objet de la présente invention. Cette réalisation particulière est donc donnée ici seulement pour l'exposé du phénomène physique qui nous intéresse. On notera la différence suivante : Le résonateur mécanique 40, dont seul le balancier 42 a été représenté aux Figures 4A-4C et 6A-6C, porte un seul aimant bipolaire 44 dont l'axe d'aimantation est sensiblement parallèle à l'axe de rotation 20 du balancier, c'est-à-dire avec une orientation axiale. Dans ce cas, le demi-axe considéré 46 du résonateur mécanique 40 passe par le centre de rotation 20 et le centre de l'aimant 44. Dans l'exemple traité ici, l'angle θ entre le demi-axe de référence 48 et le demi-axe 50 a une valeur d'environ 90°. Les deux demi-axes 48 et 50 sont fixes relativement au mouvement horloger, alors que le demi-axe 46 oscille avec le balancier et donne la position angulaire β de l'aimant monté sur ce balancier relativement au demi-axe de référence, ce dernier définissant la position angulaire zéro pour le résonateur mécanique. Plus généralement, le décalage angulaire θ est tel qu'un signal de tension induite généré dans la bobine au passage de l'aimant en regard de cette bobine est situé, lors d'une première alternance d'une quelconque oscillation, avant le passage du demi-axe médian par le demi-axe de référence (donc dans une première demi-alternance) et, lors d'une seconde alternance d'une quelconque oscillation, après le passage de ce demi-axe médian par le demi-axe de référence (donc dans une seconde demi-alternance).

La Figure 3 montre quatre graphes. Le premier graphe donne la tension dans la bobine 28 en fonction du temps lorsque le résonateur 40 oscille, c'est-à-dire lorsque l'oscillateur mécanique est activé. Le deuxième graphe indique l'instant t_{P1} auquel une impulsion de freinage est appliquée au résonateur 40 pour effectuer une correction dans la marche du mécanisme cadencé par l'oscillateur mécanique. L'instant de l'application d'une impulsion de forme rectangulaire (c'est-à-dire d'un signal binaire) est considéré ici comme la position temporelle du milieu de cette impulsion. On observe une variation de la période d'oscillation au cours de laquelle interviennent l'impulsion de freinage et donc une variation ponctuelle de la fréquence de l'oscillateur mécanique. De fait, comme on le voit sur les deux derniers graphes de la Figure 3, qui montrent respectivement la vitesse angulaire (valeurs en radian par seconde : [rad/s]) et la position angulaire (valeurs en radian : [rad]) du balancier au cours du temps, la variation temporelle concerne la seule alternance au cours de laquelle intervient l'impulsion de freinage. On notera que chaque oscillation présente deux alternances successives qui sont définies dans le présent texte comme les deux demi-périodes au cours desquelles le balancier subit respectivement un mouvement d'oscillation dans un sens et ensuite un mouvement d'oscillation dans l'autre sens. En d'autres termes, comme déjà exposé, une alternance correspond à un balancement du balancier dans un sens ou l'autre sens entre ses deux positions extrêmes définissant l'amplitude d'oscillation.

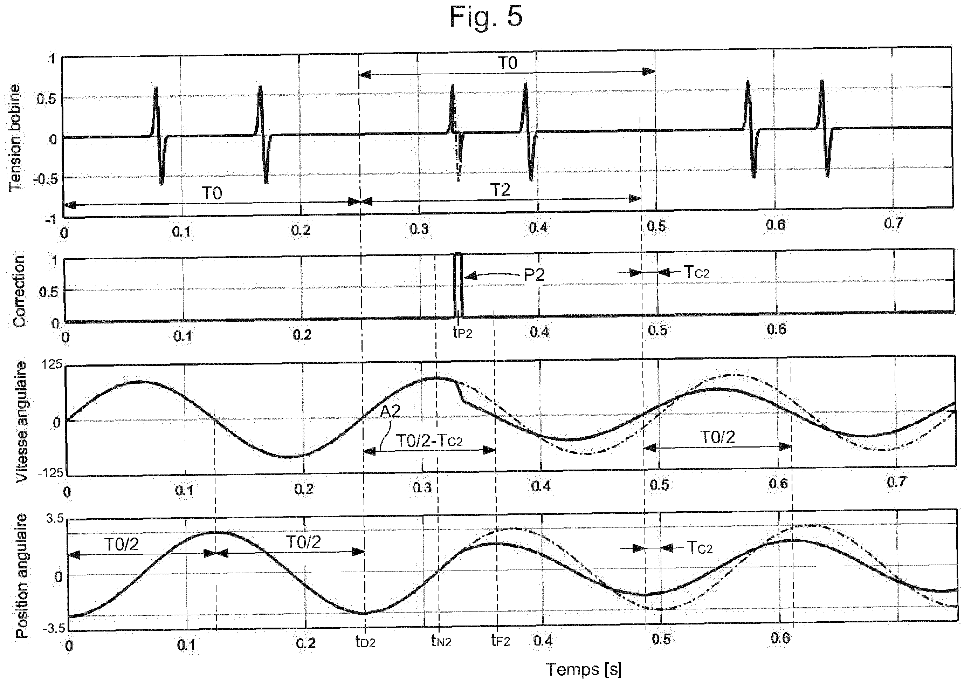

Par impulsion de freinage, on comprend une application, substantiellement durant un intervalle de temps limité, d'un certain couple de force au résonateur mécanique pour le freiner, c'est-à-dire d'un couple de force qui s'oppose au mouvement d'oscillation de ce résonateur mécanique. De manière générale, le couple de freinage peut être de natures diverses, notamment magnétique, électrostatique ou mécanique. Dans le mode de réalisation décrit, le couple de freinage est obtenu par le couplage aimant-bobine et il correspond donc à un couple magnétique de freinage exercé sur l'aimant 44 via la bobine 28 qui est commandée par un dispositif de régulation. De telles impulsions de freinage peuvent par exemple être générées en court-circuitant momentanément la bobine. Cette action est reconnaissable sur le graphe de la tension de bobine dans la zone temporelle au cours de laquelle l'impulsion de freinage est appliquée, cette zone temporelle étant prévue lors de l'apparition d'une impulsion de tension induite dans la bobine par le passage de l'aimant. C'est évidemment dans cette zone temporelle que le couplage aimant-bobine permet une action sans contact via un couple magnétique sur l'aimant fixé au balancier. On observe en effet que la tension de bobine descend vers zéro au cours d'une impulsion de freinage par court-circuit (la tension induite dans la bobine 28 par l'aimant 44 étant représentée en traits interrompus dans la zone temporelle susmentionnée). A noter que les impulsions de freinage par court-circuit représentées aux Figures 3 et 5 sont mentionnées ici dans le cadre des explications données, car la présente invention prévoit une récupération de l'énergie de freinage pour alimenter le dispositif de régulation.

Dans les Figures 3 et 5, la période d'oscillation T0 correspond à une oscillation 'libre' (c'est-à-dire sans application d'impulsions de régulation) de l'oscillateur mécanique. Chacune des deux alternances d'une période d'oscillation a une durée T0 / 2 sans perturbation ou contrainte extérieure (notamment par une impulsion de régulation). Le temps t = 0 marque le début d'une première alternance. On notera que la fréquence 'libre' F0 de l'oscillateur mécanique est ici approximativement égale à quatre Hertz (F0 = 4 Hz), de sorte que la période T0 = 250 ms environ.

En référence aux Figures 3 et 4A - 4C, on décrira le comportement de l'oscillateur mécanique dans un premier cas. Après une première période T0 commence une nouvelle période T1, respectivement une nouvelle alternance A1 au cours de laquelle intervient une impulsion de freinage P1. A l'instant initial t_{D1} débute l'alternance A1, le résonateur 40 étant alors dans l'état de la Figure 4A où l'aimant 44 occupe une position angulaire β correspondant à une position extrême (position angulaire positive maximale Aₘ). Ensuite intervient l'impulsion de freinage P1 à l'instant t_{P1} qui est situé avant l'instant médian t_{N1} auquel le résonateur passe par sa position neutre, les Figures 4B, 4C représentant le résonateur respectivement aux deux instants successifs t_{P1} et t_{N1}. Finalement l'alternance A1 se termine à l'instant final t_{F1}.

Dans le premier cas, l'impulsion de freinage est générée entre le début d'une alternance et le passage du résonateur par sa position neutre, c'est-à-dire dans une première demi-alternance de cette alternance. Comme prévu, la vitesse angulaire en valeur absolue diminue au moment de l'impulsion de freinage P1. Ceci induit un déphasage temporel négatif Tci dans la période d'oscillation du résonateur, comme le montrent les deux graphes de la vitesse angulaire et de la position angulaire à la Figure 3, soit un retard relativement au signal théorique non perturbé (représenté en traits interrompus). Ainsi, la durée de l'alternance A1 est augmentée d'un intervalle de temps Tci. La période d'oscillation T1, comprenant l'alternance A1, est donc prolongée relativement à la valeur T0. Ceci engendre une diminution ponctuelle de la fréquence de l'oscillateur mécanique et un ralentissement momentané de la marche du mécanisme associé.

En référence aux Figures 5 et 6A - 6C, on décrira le comportement de l'oscillateur mécanique dans un deuxième cas. Les graphes de la Figure 5 représentent l'évolution temporelle des mêmes variables qu'à la Figure 3. Après une première période T0 commence une nouvelle période T2, respectivement une alternance A2 au cours de laquelle intervient une impulsion de freinage P2. A l'instant initial t_{D2} débute l'alternance A2, le résonateur 40 étant alors dans une position extrême (position angulaire négative maximale non représentée). Après un quart de période (T0 / 4) correspondant à une première demi-alternance, le résonateur atteint sa position neutre à l'instant médian t_{N2} (configuration représentée à la Figure 6A). Ensuite intervient l'impulsion de freinage P2 à l'instant t_{P2} qui est situé après l'instant médian t_{N2} auquel le résonateur passe par sa position neutre dans l'alternance A2, c'est-à-dire dans une seconde demi-alternance de cette alternance. Finalement, cette alternance se termine à l'instant final tF2 auquel le résonateur occupe à nouveau une position extrême (position angulaire positive maximale). Les Figures 6B et 6C représentent le résonateur respectivement aux deux instants successifs t_{N2} et t_{F2}. On remarquera en particulier que la configuration de la Figure 6A se distingue de la configuration de la Figure 4C par les sens opposés des mouvements d'oscillation respectifs. En effet, à la Figure 4C, le balancier tourne dans un sens horaire lorsqu'il passe par la position neutre dans l'alternance A1, alors qu'à la Figure 6A ce balancier tourne dans le sens antihoraire lors du passage par la position neutre dans l'alternance A2.

Dans le deuxième cas considéré, l'impulsion de freinage est donc générée, dans une alternance, entre l'instant médian auquel le résonateur passe par sa position neutre et l'instant final auquel se termine cette alternance. Comme prévu, la vitesse angulaire en valeur absolue diminue au moment de l'impulsion de freinage P2. De manière remarquable, l'impulsion de freinage induit ici un déphasage temporel positif T_{C2} dans la période d'oscillation du résonateur, comme le montrent les deux graphes de la vitesse angulaire et de la position angulaire à la Figure 5, soit une avance relativement au signal théorique non perturbé (représenté en traits interrompus). Ainsi, la durée de l'alternance A2 est diminuée de l'intervalle de temps T_{C2}. La période d'oscillation T2 comprenant l'alternance A2 est donc plus courte que la valeur T0. Ceci engendre par conséquent une augmentation 'ponctuelle' de la fréquence instantanée de l'oscillateur mécanique et une accélération momentanée de la marche du mécanisme associé.

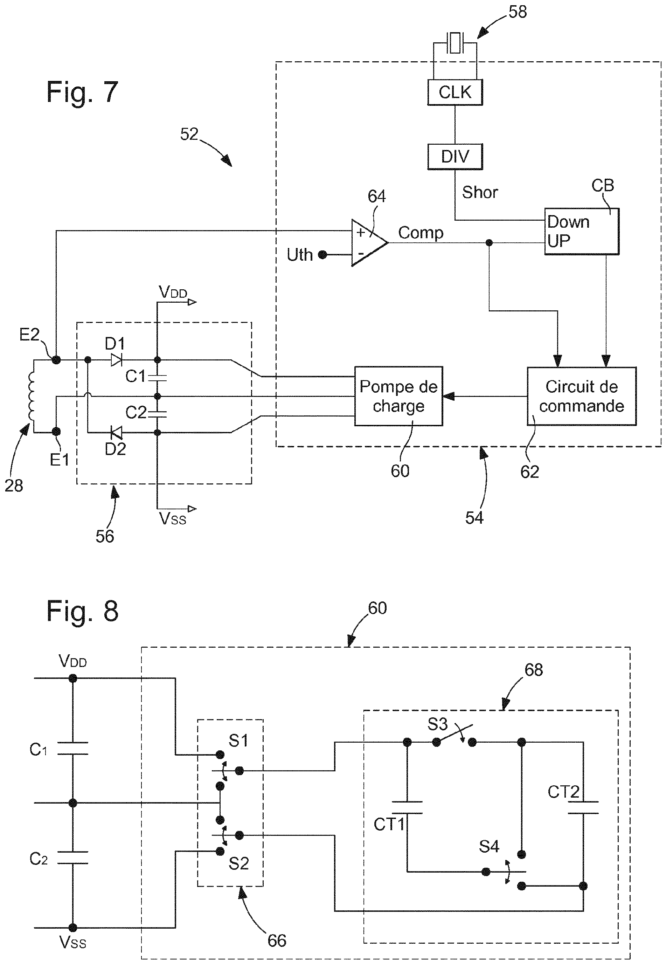

On décrira ci-après, en référence aux Figures 1 et 2 déjà décrites et aux Figures 7 à 13, un premier mode de réalisation d'une pièce d'horlogerie selon l'invention. Cette pièce d'horlogerie 2 comprend :
- un mécanisme 12,16 (montré partiellement),
- un résonateur mécanique 6 (balancier-spiral) susceptible d'osciller autour d'une position neutre correspondant à son état d'énergie potentielle mécanique minimale, chaque alternance des oscillations successives présentant un passage du résonateur mécanique par sa position neutre à un instant médian et étant constituée d'une première demi-alternance entre son instant initial et son instant médian et d'une seconde demi-alternance entre son instant médian et son instant final,
- un dispositif d'entretien 14 du résonateur mécanique formant avec ce résonateur mécanique un oscillateur mécanique qui cadence la marche du mécanisme,
- un transducteur électromécanique agencé pour pouvoir convertir de la puissance mécanique de l'oscillateur mécanique en puissance électrique en particulier lorsque le résonateur mécanique 6 oscille avec une amplitude comprise dans une plage de fonctionnement utile, ce transducteur électromagnétique étant formé par un ensemble électromagnétique 29 comprenant une bobine 28 (seul élément de l'ensemble électromagnétique représenté schématiquement à la Figure 7), montée sur le support (en particulier la platine du mouvement 4) du résonateur mécanique, et d'une paire d'aimants 22, 23 montés sur le résonateur mécanique, l'ensemble électromagnétique 29 étant agencé de manière à pouvoir fournir un signal de tension induite Ui(t) entre les deux bornes de sortie E1 et E2 du transducteur électromécanique lorsque le résonateur mécanique oscille avec une amplitude comprise dans la plage de fonctionnement utile, le signal de tension induite étant, au cours de chaque oscillation du résonateur mécanique, positif dans au moins une première partie de la période d'oscillation correspondante et négatif dans au moins une deuxième partie de cette période d'oscillation,
- un convertisseur électrique 56 agencé en sortie du transducteur électromécanique de manière à recevoir ladite puissance électrique induite, ce convertisseur électrique comprenant une unité d'alimentation C1 & C2 agencée pour pouvoir accumuler de l'énergie électrique fournie par le transducteur électromécanique, le transducteur électromécanique et le convertisseur électrique formant ainsi ensemble un dispositif de freinage du résonateur mécanique,
- un dispositif de régulation 52 de la fréquence de l'oscillateur mécanique, ce dispositif de régulation comprenant un oscillateur auxiliaire 58 & CLK et un dispositif de mesure agencé pour pouvoir mesurer une dérive temporelle éventuelle de l'oscillateur mécanique relativement à l'oscillateur auxiliaire, le dispositif de régulation étant agencé pour pouvoir déterminer si la dérive temporelle mesurée correspond à au moins une certaine avance ou à au moins un certain retard.

De préférence, l'ensemble électromagnétique 29 forme également en partie le dispositif de mesure. Ce dispositif de mesure comprend en outre un compteur bidirectionnel CB et un comparateur 64 (du type Schmidt trigger). Le comparateur reçoit à une entrée le signal de tension induite Ui(t) et à l'autre entrée un signal de tension de seuil Uₜₕ dont la valeur est positive dans l'exemple donné. Comme dans le premier mode de réalisation le signal de tension induite Uᵢ(t) présente pour chaque oscillation du résonateur 6 un seul lobe positif LU₁ qui dépasse la valeur Uₜₕ, le comparateur fournit en sortie un signal 'Comp' présentant une impulsion 70 par période d'oscillation, ce signal étant fourni d'une part à une première entrée 'UP' du compteur bidirectionnel CB et d'autre part à un circuit logique de commande 62. Le compteur bidirectionnel comprend une deuxième entrée 'Down' qui reçoit un signal d'horloge Sₕₒᵣ à une fréquence nominale / fréquence de consigne pour la fréquence d'oscillation, ce signal d'horloge étant dérivé de l'oscillateur auxiliaire qui fournit un signal digital de référence définissant une fréquence de référence. L'oscillateur auxiliaire comprend un circuit d'horloge CLK servant à exciter le résonateur à quartz 58 et à fournir en retour le signal de référence qui est composé d'une succession d'impulsions correspondant respectivement aux périodes d'oscillation du résonateur à quartz.

Le circuit d'horloge fournit son signal de référence à un diviseur DIV qui divise le nombre d'impulsions dans ce signal de référence par le rapport entre la période nominale de l'oscillateur mécanique et la période de référence nominale de l'oscillateur auxiliaire. Le diviseur fournit ainsi un signal d'horloge Sₕₒᵣ définissant une fréquence de consigne (par exemple 4Hz) et présentant une impulsion par période de consigne (par exemple 250 ms) au compteur CB. Ainsi, l'état du compteur CB détermine l'avance (si le nombre est positif) ou le retard (si le nombre est négatif) accumulé(e) au cours du temps par l'oscillateur mécanique relativement à l'oscillateur auxiliaire avec une résolution correspondant sensiblement à une période de consigne. L'état du compteur est fourni à un circuit logique de commande 62 qui est agencé pour déterminer si cet état correspond à au moins une certaine avance (CB > N1, N1 étant un nombre naturel) ou à au moins un certain retard (CB < -N2, N2 étant un nombre naturel).

Le convertisseur électrique 56 comprend un premier circuit D1 & C1 d'accumulation d'énergie électrique qui est agencé pour pouvoir recharger une première capacité d'alimentation C1 de l'unité d'alimentation seulement avec une tension positive en entrée du convertisseur électrique et un deuxième circuit D2 & C2 d'accumulation d'énergie électrique qui est agencé pour pouvoir recharger une deuxième capacité d'alimentation C2 de l'unité d'alimentation seulement avec une tension négative en entrée du convertisseur électrique. Lors d'une recharge, la quantité d'énergie électrique fournie par le dispositif de freinage à la première capacité d'alimentation, respectivement à la deuxième capacité d'alimentation est d'autant plus grande que le niveau de tension, en valeur absolue, de cette première capacité d'alimentation, respectivement de cette deuxième capacité d'alimentation est bas.

Une charge est connectée ou susceptible d'être régulièrement connectée en sortie du convertisseur électrique 56 et alimentée par l'unité d'alimentation qui fournit les tensions d'alimentation V_{DD} et Vss, cette charge comprenant notamment le circuit de régulation 54 qui est alimenté par l'unité d'alimentation. De préférence, les première et deuxième capacités d'alimentation ont sensiblement une même valeur de capacité.

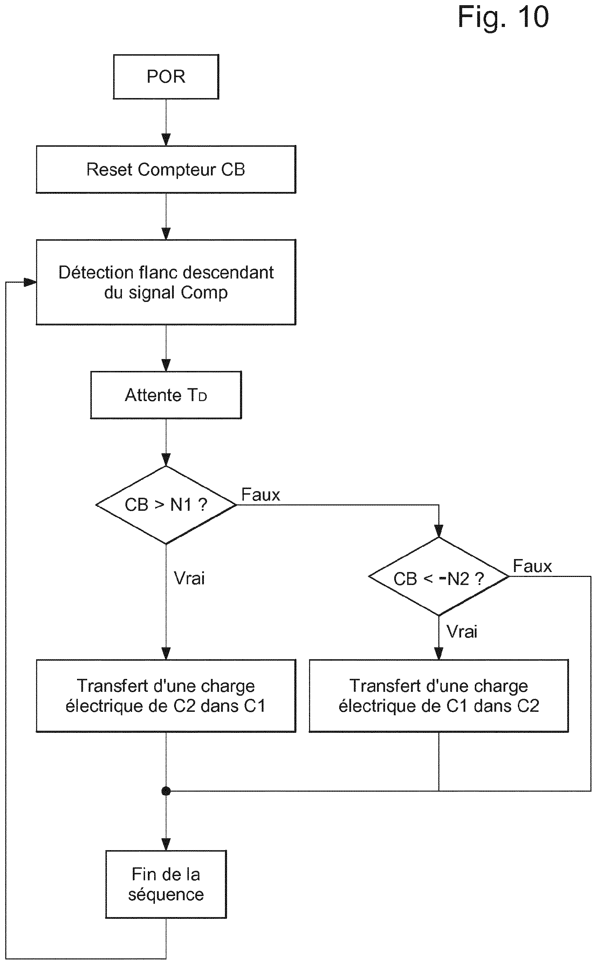

La pièce d'horlogerie 2 est remarquable par le fait que le circuit de régulation 54 du dispositif de régulation comprend une pompe de charge 60 agencée pour pouvoir transférer sur commande des charges électriques de la première capacité d'alimentation C1 vers la deuxième capacité d'alimentation C2 et inversement. Une variante de réalisation d'une telle pompe de charge est représentée à la Figure 8. Cette pompe de charge comprend un circuit multiplexeur 66, formé de deux commutateurs S1 et S2, et un circuit de transfert de charges électriques comprenant un interrupteur S3, un commutateur S4 et deux capacités commutables CT1 et CT2. Le fonctionnement de la pompe de charge, bien connu des personnes du métier, ne sera pas décrit ici. L'interrupteur S3 et les commutateurs S1, S2 et S4 sont commandés par le circuit logique de commande 62 selon un procédé de régulation (Figure 10) selon l'invention qui sera décrit par la suite.

Dans une première variante générale, le dispositif de freinage est agencé de manière que, pour chaque oscillation du transducteur mécanique dans la plage de fonctionnement utile, une recharge de la capacité d'alimentation C2 intervienne en majeure partie globalement dans les deux premières demi-alternances TM₁-TN₁, TM₃-TN₃ et une recharge de la capacité d'alimentation C1 intervienne en majeure partie globalement dans les deux secondes demi-alternances TN₀-TM₁, TN₂-TM₃. Dans une deuxième variante générale, le dispositif de freinage est agencé de manière que, pour chaque oscillation du transducteur mécanique dans la plage de fonctionnement utile, une recharge de la capacité C1 intervienne en majeure partie globalement dans les deux premières demi-alternances TM₁-TN₁, TM₃-TN₃ et une recharge de la capacité C2 intervienne en majeure partie globalement dans les deux secondes demi-alternances TN₀-TM₁, TN₂-TM₃. Le circuit logique de commande 62 est agencé pour commander la pompe de charge en fonction de la première ou deuxième variante générale implémentée, le transfert entre les deux capacités d'alimentation étant inversé entre les première et deuxième variantes générales pour une quelconque dérive temporelle mesurée.

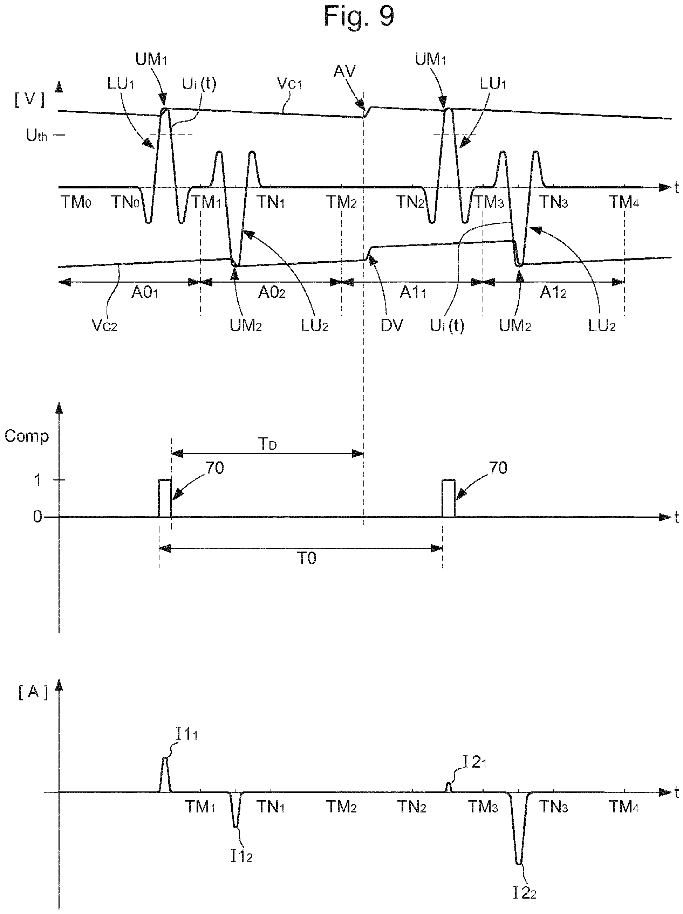

Dans le cadre de la première variante générale qui correspond au cas des Figures 9 et 10, le circuit logique de commande 62 de la pompe de charge est agencé de manière à activer la pompe de charge 60 pour qu'elle effectue un transfert d'une certaine charge électrique de la deuxième capacité d'alimentation C2 vers la première capacité d'alimentation C1 lorsque la dérive temporelle mesurée correspond à au moins une certaine avance (CB > N1), de sorte à augmenter, au moins dans une période d'oscillation suivant un tel transfert, la recharge de la deuxième capacité C2 (comme représenté à la Figure 9) relativement au cas hypothétique où un tel transfert de la certaine charge électrique n'aurait pas lieu. Ensuite, le circuit logique de commande 62 de la pompe de charge est agencé de manière à également activer la pompe de charge 60 pour qu'elle effectue un transfert d'une certaine charge électrique de la première capacité d'alimentation C1 vers la deuxième capacité d'alimentation C2 lorsque la dérive temporelle mesurée correspond à au moins un certain retard (CB < -N2), de sorte à augmenter, au moins dans une période d'oscillation suivant un tel transfert, la recharge de la première capacité C1 relativement au cas hypothétique où un tel transfert de cette certaine charge électrique n'aurait pas lieu.

A la Figure 9 est représentée, pour la première variante générale, la situation intervenant suite de la détection d'une certaine dérive temporelle correspondant à une avance de la marche de la pièce d'horlogerie, c'est-à-dire à une fréquence de l'oscillateur mécanique supérieure à la fréquence de consigne. Le signal de tension induite Ui(t) correspond à celui généré par l'ensemble électromagnétique 29 décrit précédemment en relation avec la Figure 1. Sur l'axe du temps [t] ont été indiqués les instants médians TNn, n = 0, 1, 2, ..., correspondant aux passages successifs du résonateur mécanique 6 par sa position neutre lors d'oscillations dans la plage de fonctionnement utile, et les instants TMn, n = 0, 1, 2, ..., correspondant aux passages successifs du résonateur mécanique alternativement par ses deux positions extrêmes où sa vitesse angulaire est nulle et le sens de son balancement s'inverse. Le sens d'enroulement de la bobine 28 et les polarités des deux aimants 22, 23 sont prévus de manière que, dans chaque période d'oscillation de l'oscillateur mécanique, un premier lobe de tension LUi du signal de tension induite Ui (t) présente une tension positive maximale UM₁ pour cette période d'oscillation et un deuxième lobe de tension LU₂ de ce signal de tension induite présente une tension négative maximale UM₂ pour cette période d'oscillation.

Dans une première variante particulière, représentée à la Figure 9, le premier lobe de tension et le deuxième lobe de tension interviennent respectivement dans une seconde demi-alternance TNn - TMn, n = 0, 1, 2, ..., d'une alternance A0₁, A1₁ de chaque période d'oscillation et dans une première demi-alternance TMn - TNn, n = 0, 1, 2, ..., de l'autre alternance A0₂, A1₂ de cette période d'oscillation. Dans une deuxième variante particulière, le deuxième lobe de tension et le premier lobe de tension interviennent respectivement dans une seconde demi-alternance TNn - TMn, n = 0, 1, 2, ..., d'une alternance de chaque période d'oscillation et dans une première demi-alternance TMn - TNn, n = 0, 1, 2, ..., de l'autre alternance de cette période d'oscillation. On notera qu'une simple inversion des bornes E1 et E2 de la bobine ou, de manière équivalente, du sens d'enroulement du fil formant cette bobine engendre un changement de polarité pour la tension induite de sorte qu'une telle inversion permet de passer de la première variante à la deuxième variante et inversement.

Dans le premier mode de réalisation, comme déjà mentionné en partie précédemment, l'ensemble électromagnétique 29 comprend une paire d'aimants bipolaires, montés sur le balancier et ayant des axes d'aimantation avec des polarités respectives opposées, et une bobine solidaire du support du résonateur mécanique. Un demi-axe médian 26 partant de l'axe de rotation 20 du balancier et passant par le milieu de cette paire d'aimants définit un demi-axe de référence 48 lorsque le résonateur est au repos et ainsi dans sa position neutre. Comme on le voit à la Figure 9, la paire d'aimants et la bobine sont agencées de manière que le signal de tension induite Uᵢ (t) généré aux bornes E1, E2 de la bobine au passage de la paire d'aimants en regard de cette bobine présente un lobe central LUi, LU₂ avec une amplitude maximale résultant d'un couplage simultané de la paire d'aimants avec la bobine. Ensuite, la bobine 28 présente en son centre un décalage angulaire θ non nul relativement au demi-axe de référence 48 pour engendrer dans chaque période d'oscillation du résonateur mécanique les premier et deuxième lobes de tension dans respectivement les seconde et première demi-alternances (cas de la Figure 9) ou dans respectivement les première et seconde demi-alternances, comme exposé précédemment. Le décalage angulaire θ est avantageusement compris entre 30° et 120° en valeur absolue.

A la Figure 9 sont également représentées la tension positive V_{C1} à la borne supérieure (définissant V_{DD}) de la capacité d'alimentation C1 et la tension négative V_{C2} à la borne inférieure (définissant V_{SS}) de la capacité d'alimentation C2 (la tension zéro étant considérée comme celle de l'extrémité E1 de la bobine). La tension d'alimentation V_{AL} disponible est donc donnée par V_{C1} - V_{C2}, soit l'addition des tensions respectives des première et deuxième capacités C1 et C2. Dans le cadre de l'invention, une charge est agencée en sortie du convertisseur électrique. Elle comprend notamment le circuit de régulation qui est alimenté par les première et deuxième capacités d'alimentation délivrant la tension d'alimentation V_{AL}. Ainsi, en dehors de courtes périodes de recharge de l'une et l'autre des deux capacités d'alimentation, il y a une certaine diminution progressive (en valeur absolue) des tensions V_{C1} et V_{C2} au cours du temps. Les lobes de tension LU₁ et LU₂ qui présentent respectivement la tension induite positive maximale UM₁ et la tension induite négative maximale UM₂ (en valeur absolue) servent à recharger respectivement les capacités C1 et C2.

Dans la première période T0 au cours de laquelle aucun événement de régulation n'intervient, un pic de courant induit I1₁ recharge la capacité C1 dans une seconde demi-alternance et un pic de courant induit I1₂ recharge la capacité C2 dans une première demi-alternance. Ces pics de courant induit correspondent à des puissances électriques engendrées par le transducteur électromécanique dans l'ensemble électromagnétique 29 et absorbées par le convertisseur électrique 56. Ces puissances électriques correspondent ainsi à des puissances mécaniques fournies par l'oscillateur mécanique. Elles sont converties par le convertisseur électrique et consommées par la charge qui lui est associée. Ainsi chaque pic de courant induit IN₁ et IN₂, N = 1, 2, ..., fourni par le transducteur électromécanique au convertisseur électrique correspond à une impulsion de freinage et donc à un certain couple de freinage momentané appliqué à l'oscillateur mécanique. Selon le phénomène physique exposé précédemment en référence aux Figures 3 à 6, les pics de courant induit IN₁ engendrent une diminution de la durée des alternances au cours desquelles elles interviennent, et donc une augmentation de la fréquence instantanée de l'oscillateur mécanique, alors que les pics de courant induit IN₂ engendrent une augmentation de la durée des alternances au cours desquelles elles interviennent, et donc une diminution de la fréquence instantanée de l'oscillateur mécanique.

Dans une période de fonctionnement au cours de laquelle aucun événement de régulation et aucun comportement particulier découlant d'un tel événement de régulation n'intervient, c'est-à-dire dans une période correspondant à un fonctionnement normal sans régulation, on a donc la situation représentée dans la première période d'oscillation à la Figure 9 concernant les tensions V_{C1} et V_{C2} et les impulsions de recharge des capacités C1 et C2 respectivement par les courants induits I1₁ et I1₂, à savoir une situation équilibrée dans laquelle une première énergie électrique absorbée par le convertisseur électrique globalement dans les deux premières demi-alternances est sensiblement identique à une deuxième énergie électrique absorbée par le convertisseur électrique globalement dans les deux secondes demi-alternances de chaque période d'oscillation. Ainsi, le déphasage temporel positif qui intervient globalement dans les deux secondes demi-alternances est compensé par le déphasage temporel négatif qui intervient globalement dans les deux premières demi-alternances de chaque période d'oscillation. Dans le cas particulier représenté à la figure 9, le déphasage temporel positif qui intervient dans la première alternance A0₁ est compensé par le déphasage temporel négatif qui intervient dans la seconde alternance A0₂ de la période d'oscillation correspondante. On comprend donc que, bien que la durée de la première alternance est différente de celle de la seconde alternance, leur somme est égale à une période d'oscillation naturelle T0 de l'oscillateur non soumis à une action de régulation.

Au cours de la première période T0, le circuit logique de commande a détecté que la dérive temporelle mesurée par le dispositif de mesure correspond à une certaine avance dans la marche de la pièce d'horlogerie. Il opère alors une action de régulation consistant à transférer une certaine charge électrique de la capacité C2 vers la capacité C1. Pour ce faire, de préférence, le dispositif de régulation comprend un circuit de détection d'un événement déterminé dans le signal de tension induite et un circuit temporisateur relié au circuit logique de commande qui est agencé pour activer avantageusement la pompe de charge dans des zones temporelles hors de l'apparition des premier et deuxième lobes LU₁ et LU₂ du signal de tension induite. A cet effet, le signal 'Comp' du comparateur 64 est fourni au circuit logique de commande, ledit événement déterminé étant l'apparition d'une impulsion 70 dans ce signal. Au flanc descendant d'une impulsion 70, le temporisateur est activé et il compte alors un intervalle de temps T_{D} prédéfini puis active la pompe de charge pour transférer une certaine charge électrique, ce qui engendre une augmentation AV de la tension V_{C1} et conjointement une diminution DV de la tension V_{C2} (en valeur absolue). On engendre ainsi un déséquilibre entre les tensions V_{C1} et V_{C2}, l'une V_{C1} étant chargée au détriment de l'autre V_{C2} qui est partiellement déchargée. Comme les impulsions de tension induite demeurent identiques au cours du temps (en l'absence de baisse d'amplitude d'oscillation ou sans anisochronisme), la différence absolue entre V_{C1} et la tension positive maximale UM₁ diminue alors que la différence absolue entre V_{C2} et la tension négative maximale UM₂ augmente, la valeur absolue de V_{C2} diminuant. Par conséquent, lors de la génération du lobe de tension LU₁ dans l'alternance A1₁, le courant induit I2₁ est relativement faible, voire nul, alors que lors de la génération du lobe de tension LU₂ dans l'alternance A1₂, le courant induit I2₂ est relativement important, comme on peut le voir sur le graphe en bas de la Figure 9.

En diminuant l'énergie électrique extraite par le convertisseur électrique lors de l'alternance A1₁, on diminue le freinage de l'oscillateur dans les secondes demi-alternances relativement à la période T0 précédente, ce qui correspond à une diminution du déphasage temporel positif. De plus, en augmentant l'énergie électrique extraite par le convertisseur électrique lors de l'alternance A1₂, on augmente le freinage de l'oscillateur dans les premières demi-alternances relativement à la période T0 précédente, ce qui correspond à une augmentation du déphasage temporel négatif. Ces deux variations ont donc un effet qui va dans le même sens. Ainsi, globalement, relativement à la période précédente, le transfert de charge électrique a engendré un déphasage temporel négatif et donc une augmentation de la durée de la période d'oscillation suivant ce transfert. On obtient une diminution de la fréquence instantanée de l'oscillateur, ce qui permet de corriger au moins partiellement la certaine avance détectée ayant conduit à cette action de régulation. L'organigramme de la Figure 10 résume le procédé de régulation implémenté dans le circuit logique de commande. De manière similaire à ce qui vient d'être décrit, lorsque le circuit logique de commande détecte que la dérive temporelle mesurée par le dispositif de mesure correspond à un certain retard dans la marche de la pièce d'horlogerie, il opère alors une action de régulation consistant à transférer une certaine charge électrique de la capacité C1 vers la capacité C2. La conséquence est inverse, à savoir que, relativement à la période précédente, le transfert de charge électrique engendre globalement un déphasage temporel positif et donc une diminution de la durée de la période d'oscillation suivant ce transfert. On obtient ainsi une augmentation de la fréquence instantanée de l'oscillateur permettant de corriger au moins partiellement le retard détecté.

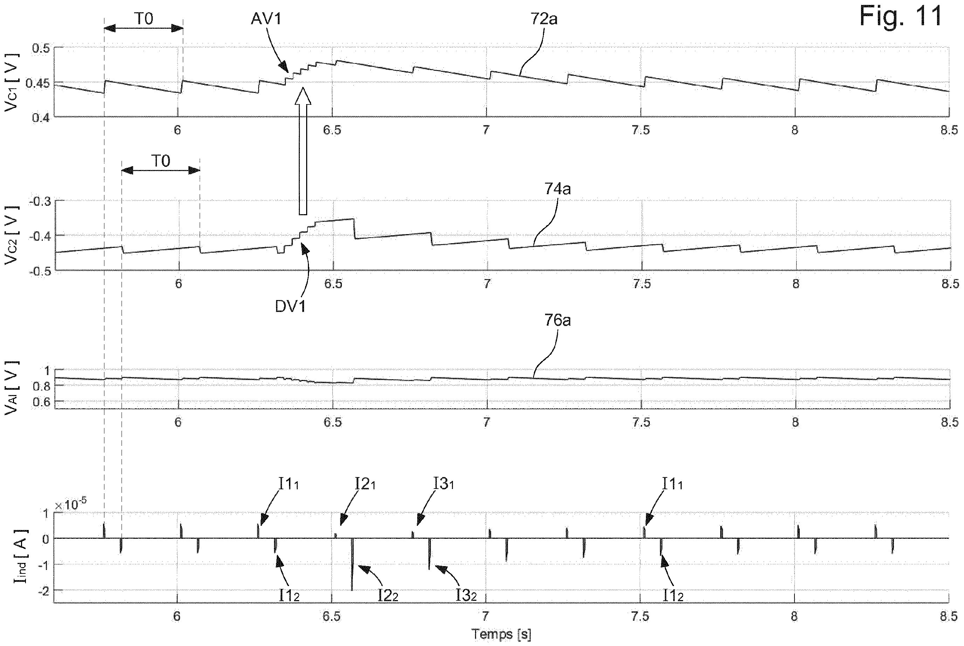

La Figure 11 montre une simulation du fonctionnement d'une variante du premier mode de réalisation dans laquelle l'agencement de la pompe de charge permet un transfert de charge électrique limité par cycle, de sorte que la pompe de charge est commandée de manière à effectuer une succession rapide de plusieurs cycles de transfert d'une charge électrique lorsqu'une certaine dérive temporelle a été détectée. Dans l'exemple particulier de la Figure 11, une augmentation AV1 en escalier de la tension V_{C1}, respectivement une diminution DV1 correspondante de la tension V_{C2} sont engendrées sur d'une durée inférieure à une alternance. Les courbes 72a et 74a donnent l'évolution des tensions V_{C1} et V_{C2}. La courbe 76a donne la tension d'alimentation, laquelle demeure sensiblement stable. Le graphe du bas de la Figure 11 montre le courant induit I_{ind} qui présente, comme exposé précédemment, une succession d'impulsions IN₁ et IN₂, n = 1, 2, .... Plus précisément, en dehors de la période de régulation, on a alternativement des impulsions I1₁ et I1₂ telles que déjà décrites. Suite au transfert de charge électrique (AV1, DV1), on obtient dans la période d'oscillation suivant directement un tel transfert les impulsions I2₁ et I2₂ telles que déjà décrites. Finalement, on observe une période de transition (par exemple d'une durée de trois périodes d'oscillation, comme dans le graphe considéré) au cours de laquelle intervient encore un déséquilibre dans la recharge des capacités C1 et C2, comme on le voit avec les impulsions I3₁ et I3₂, et donc un certain déphasage temporel additionnel lié au transfert de la charge électrique.

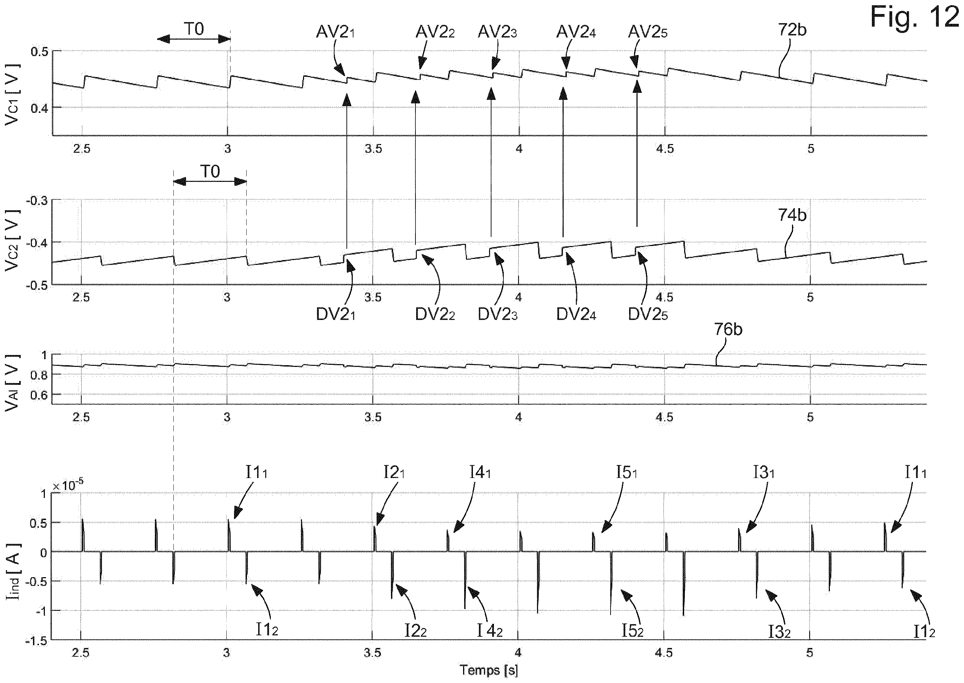

Dans la variante de la Figure 12, représentant les mêmes grandeurs physiques que la Figure 11, le circuit logique de commande est agencé de manière que, lorsque la dérive temporelle mesurée correspond à au moins une certaine avance, une pluralité de transferts distincts (correspondant aux variations de tension AV2ₘ et DV2ₘ, m = 1, 2, 3, ..., respectivement pour les tensions Vci, graphe 72b, et V_{C2}, graphe 74b) de premières charges électriques de la capacité C2 vers la capacité C1 sont effectués au cours d'une pluralité d'oscillations respectives du résonateur mécanique. On observe alors dans la période de régulation, suite à la première paire d'impulsions I2₁ et I2₂ déjà décrites, une première période de transition avec des paires d'impulsions I4₁ et I4₂ ayant des valeurs de crête / pic qui augmentent progressivement la différence entre les deux impulsions avant qu'intervienne un régime stationnaire / une période stationnaire avec des paires d'impulsions I5₁ et I5₂ présentant le plus grand rapport entre les valeurs de crête / pic. A nouveau on peut observer que la tension d'alimentation V_{AL}, graphe 76b, est sensiblement stable.

Dans un procédé de régulation plus sophistiqué, on peut prévoir de varier, en fonction de la dérive temporelle mesurée, le nombre de périodes d'oscillation au cours desquelles est effectué un certain transfert de charge électrique. Ainsi, dès qu'une première dérive est constatée, un transfert de charge électrique est effectué lors d'une séquence du procédé de régulation dans une seule période d'oscillation, alors que dès qu'une deuxième dérive temporelle supérieure à la première dérive est constatée, plusieurs transferts de charges électriques sont effectués dans plusieurs périodes d'oscillation respectives lors d'une séquence du procédé de régulation. Bien entendu, plusieurs valeurs prédéterminées pour la dérive temporelle peuvent être mises en mémoire dans le circuit de régulation et le nombre de cycles de transfert d'une certaine charge électrique par la pompe de charge est prévu en fonction de quelle valeur prédéterminée est détectée.

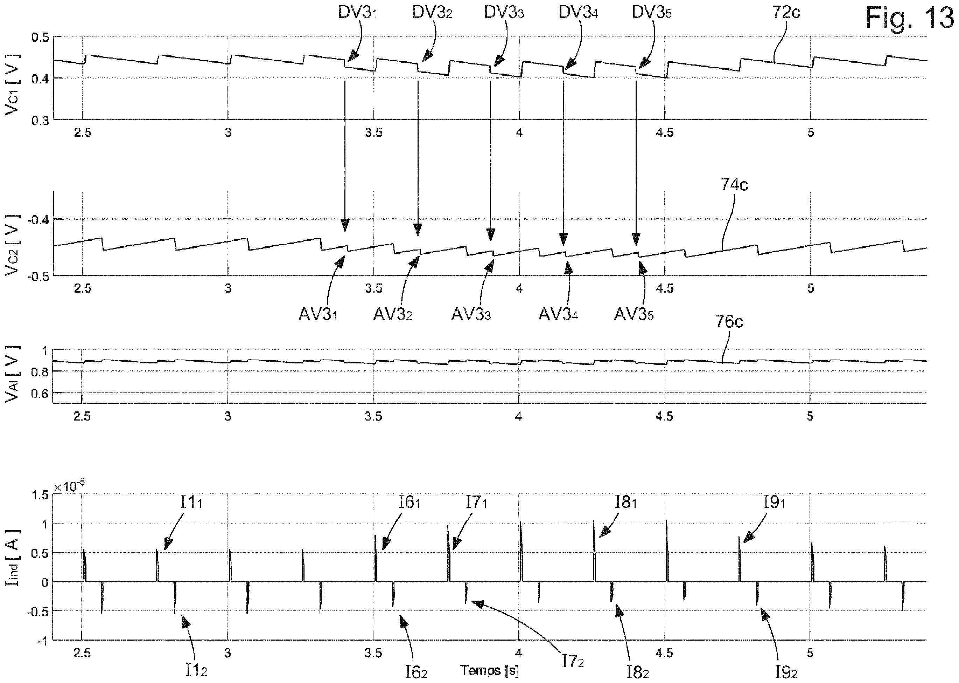

La Figure 13 montre, pour le même procédé de régulation que présenté à la Figure 12 et ainsi la même pièce d'horlogerie, le cas où le circuit de régulation détecte au moins un certain retard dans la marche de la pièce d'horlogerie. Dans ce cas, de manière à engendrer un déphasage temporel positif, les transferts de charges électriques sont effectués successivement de la capacité C1 vers la capacité C2. On engendre ainsi le déphasage temporel positif voulu et donc une diminution de la durée de quelques périodes d'oscillation suivant ce transfert. On obtient alors une augmentation de la fréquence instantanée de l'oscillateur, ce qui permet de corriger au moins partiellement le certain retard détecté ayant conduit à cette action de régulation. Plus précisément, le circuit logique de commande est agencé de manière que, lorsque la dérive temporelle mesurée correspond à au moins un certain retard, une pluralité de transferts distincts (correspondant aux variations de tension AV3ₘ et DV3ₘ, m = 1, 2, 3, ..., respectivement pour les tensions V_{C2}, graphe 74c, et Vci, graphe 72c) de deuxièmes charges électriques de la capacité C1 vers la capacité C2 sont effectués au cours d'une pluralité d'oscillations respectives du résonateur mécanique. Comme attendu, le graphe 76c de la tension d'alimentation V_{AL} montre qu'elle est sensiblement stable. Les paires d'impulsions I6₁ et I6₂, I7₁ et I7₂, I8₁ et I8₂, I9₁ et I9₂ du courant induit I_{ind} dans la période de régulation présentent au niveau de leurs valeurs de crête / pic une inversion, en valeur absolue, relativement aux paires correspondantes de la Figure 12 (respectivement aux paires d'impulsions I2₁ et I2₂, I4₁ et I4₂, I5₁ et I5₂, I3₁ et I3₂).

Afin d'augmenter la tension induite et ainsi la tension d'alimentation, il est prévu dans un deuxième mode de réalisation de fournir un ensemble électromagnétique avec deux bobines agencées sur le support du balancier-spiral et deux paires d'aimants bipolaires montées sur le balancier, chaque paire d'aimants ayant une configuration telle que représentée aux Figures 1 et 2. Avantageusement, la deuxième paire d'aimants présente une ouverture angulaire sensiblement identique à celle de la première paire d'aimants. De plus, la deuxième bobine et la deuxième paire d'aimants présentent entre elles un deuxième décalage angulaire sensiblement identique au premier décalage angulaire entre la première bobine et la première paire d'aimants. Les sens d'enroulement des première et deuxième bobines et la liaison entre elles et/ou au convertisseur sont prévus de manière que les deux tensions induites respectives dans les première et deuxième bobines s'additionnent.

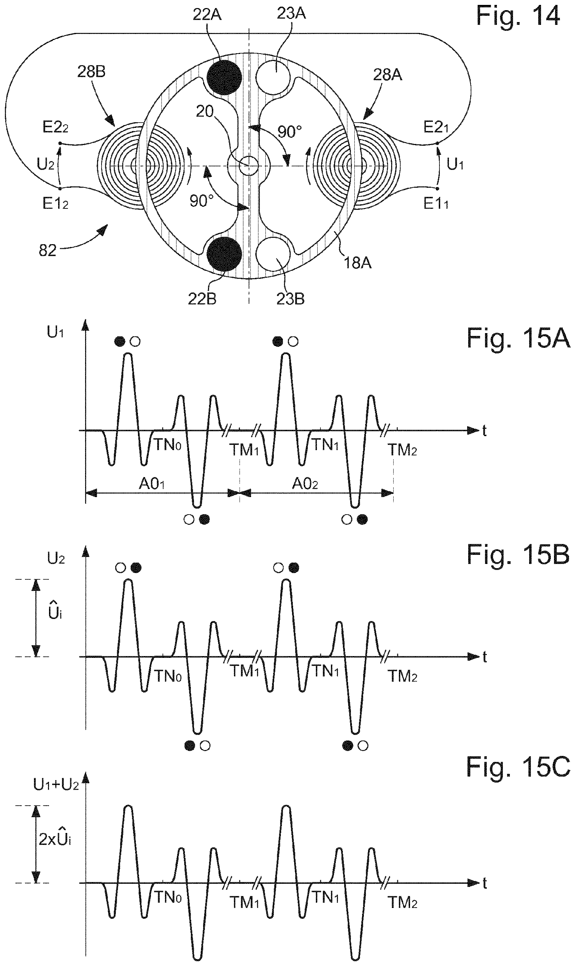

Le deuxième mode de réalisation se distingue essentiellement du premier mode de réalisation par l'agencement de l'ensemble électromagnétique formant le transducteur électromécanique. En référence aux Figures 14 et 15A-15C, on décrira ci-après une variante spécifique du deuxième mode de réalisation d'une pièce d'horlogerie selon l'invention. Le convertisseur électrique, le circuit de régulation et le procédé de régulation étant similaires à ceux du premier mode de réalisation, ils ne seront pas décrits ici. L'ensemble électromagnétique du transducteur électromécanique 82 est spécifique premièrement par le fait que les premier et deuxième décalages angulaires ont chacun sensiblement une valeur égale à 90°. Ensuite, les première et deuxième paires d'aimants bipolaires 22A,23A, 22B,23B présentent entre elles une symétrie planaire avec pour plan de symétrique un plan géométrique comprenant l'axe de rotation 20 du résonateur mécanique et un axe géométrique passant par les centres des deux bobines. Finalement, les première et deuxième bobines 28A, 28B ont des sens d'enroulement inverses en projection dans le plan général médian, ces première et deuxième bobines étant alignées sur une droite passant par le centre de rotation 20 et étant reliées (extrémités respectives E2₁ et E1₂) de manière que leurs tensions induites respectives s'additionnent aux deux bornes de sortie E1₁ et E2₂ du transducteur électromécanique.

Comme montré aux Figures 15A à 15C, cette configuration spécifique permet non seulement d'augmenter la tension induite fournie au convertisseur électrique, mais en plus de doubler les premier et deuxième lobes de tension induites présentant respectivement une tension positive maximale et une tension négative maximale. Au-dessus de chaque lobe de tension est représenté une paire d'aimants avec le sens de l'apparition successive de ses deux aimants en regard de la bobine considérée. Grâce à l'ensemble électromagnétique spécifique, on obtient deux lobes de tension positive respectivement dans les premières demi-alternances respectives des deux alternances A0₁ et A0₂ d'une période d'oscillation du résonateur mécanique, ainsi que deux lobes de tension négative respectivement dans les secondes demi-alternances respectives des deux alternances A0₁ et A0₂ Les signaux de tension induite U₁ et U₂ fournis par les bobines 28A et 28B s'additionnent, comme montré à la Figure 15C, résultant en un doublement de la tension de crête Ûi. Ainsi, chaque lobe de tension induite (figures 15A et 15B) participe à la recharge des deux capacités du convertisseur électrique et donc à l'alimentation de la charge qui lui est associée. Il en résulte une régulation de la marche de la pièce d'horlogerie qui peut intervenir dans les deux alternances d'une ou plusieurs période(s) d'oscillation suivant des transferts de charges électriques entre les deux capacités. A noter que le comparateur du dispositif de mesure génère deux impulsions par période d'oscillation, une impulsion sur deux étant fournie au compteur bidirectionnel.

## Revendications

1. Pièce d'horlogerie (2), comprenant :
- un mécanisme,
- un résonateur mécanique (6) susceptible d'osciller autour d'une position neutre correspondant à son état d'énergie potentielle mécanique minimale, chaque oscillation du résonateur mécanique définissant une période d'oscillation et présentant deux alternances successives chacune entre deux positions extrêmes qui définissent l'amplitude d'oscillation du résonateur mécanique, chaque alternance présentant un passage du résonateur mécanique par sa position neutre à un instant médian et étant constituée d'une première demi-alternance entre un instant initial de cette alternance et son instant médian et d'une seconde demi-alternance entre cet instant médian et un instant final de cette alternance,
- un dispositif d'entretien (14) du résonateur mécanique formant avec ce résonateur mécanique un oscillateur mécanique qui définit la cadence de la marche dudit mécanisme,
- un transducteur électromécanique agencé pour pouvoir convertir de la puissance mécanique de l'oscillateur mécanique en puissance électrique lorsque le résonateur mécanique oscille avec une amplitude dans une plage de fonctionnement utile, ce transducteur électromagnétique étant formé par un ensemble électromagnétique (29) comprenant au moins une bobine (28), montée sur un élément parmi l'ensemble mécanique constitué du résonateur mécanique et de son support, et au moins un aimant (22, 23) monté sur l'autre élément de cet ensemble mécanique, l'ensemble électromagnétique étant agencé de manière à pouvoir fournir un signal de tension induite (Ui(t)) entre les deux bornes de sortie (E1, E2) du transducteur électromécanique lorsque le résonateur mécanique oscille avec une amplitude dans ladite plage de fonctionnement utile,
- un convertisseur électrique (56) relié aux deux bornes de sortie du transducteur électromécanique de manière à pouvoir recevoir de ce transducteur électromécanique un courant électrique induit, ce convertisseur électrique comprenant une unité d'alimentation agencée pour pouvoir accumuler de l'énergie électrique fournie par le transducteur électromécanique, ce transducteur électromécanique et le convertisseur électrique formant ensemble un dispositif de freinage du résonateur mécanique,
- une charge (54) connectée ou susceptible d'être régulièrement connectée au convertisseur électrique de manière à pouvoir être alimentée par l'unité d'alimentation,
- un dispositif de régulation (8, 52) de la fréquence de l'oscillateur mécanique, ce dispositif de régulation comprenant un oscillateur auxiliaire (58) et un dispositif de mesure (64, CB) agencé pour pouvoir détecter une dérive temporelle éventuelle de l'oscillateur mécanique relativement à l'oscillateur auxiliaire, le dispositif de régulation étant agencé pour pouvoir déterminer si la dérive temporelle mesurée correspond à au moins une certaine avance ;
la pièce d'horlogerie étant **caractérisée en ce que** l'unité d'alimentation comprend une première capacité d'alimentation (C1) et une deuxième capacité d'alimentation (C2), agencées tous deux pour pouvoir alimenter ladite charge, et le convertisseur électrique est formé par un premier circuit d'accumulation d'énergie électrique, qui comprend la première capacité d'alimentation et qui est agencé pour pouvoir recharger cette première capacité d'alimentation (C1) seulement avec une tension ayant une première polarité en entrée du convertisseur électrique, et par un deuxième circuit d'accumulation d'énergie électrique qui comprend la deuxième capacité d'alimentation et qui est agencé pour pouvoir recharger cette deuxième capacité d'alimentation (C2) seulement avec une tension ayant une deuxième polarité, opposée à la première polarité, en entrée du convertisseur électrique, le dispositif de freinage étant agencé de manière qu'une quantité d'énergie électrique fournie lors d'une recharge à la première capacité d'alimentation, respectivement à la deuxième capacité d'alimentation est d'autant plus grande que le niveau de tension de cette première capacité d'alimentation, respectivement de cette deuxième capacité d'alimentation est bas ; **en ce que** le dispositif de freinage est agencé de manière que ledit signal de tension induite présente dans chaque période d'oscillation de l'oscillateur mécanique, lorsque ladite amplitude d'oscillation est comprise dans la plage utile de fonctionnement, au moins un premier intervalle, situé dans les deux premières demi-alternances, dans lequel ce signal de tension induite présente ladite première polarité et au moins un deuxième intervalle, situé dans les deux secondes demi-alternances, dans lequel ce signal de tension induite présente ladite deuxième polarité, le dispositif de freinage étant en outre agencé de manière que, pour chaque oscillation du résonateur mécanique avec une amplitude dans ladite plage de fonctionnement utile, une recharge de la première capacité d'alimentation, le cas échéant, intervienne en majeure partie globalement dans les deux premières demi-alternances et une recharge de la deuxième capacité d'alimentation, le cas échéant, intervienne en majeure partie globalement dans les deux secondes demi-alternances ; **en ce que** le dispositif de régulation comprend une pompe de charge (60) agencée pour pouvoir transférer sur commande des charges électriques de la première capacité d'alimentation à la deuxième capacité d'alimentation ; et **en ce que** le dispositif de régulation comprend en outre un circuit logique (62) de commande de la pompe de charge qui reçoit en entrée un signal de mesure fourni par le dispositif de mesure et qui est agencé de manière à activer la pompe de charge pour qu'elle effectue un transfert d'une première charge électrique de la première capacité d'alimentation à la deuxième capacité d'alimentation lorsque la dérive temporelle mesurée correspond à ladite au moins une certaine avance.

2. Pièce d'horlogerie selon la revendication 1, **caractérisée en ce que** le circuit logique de commande est agencé de manière à pouvoir effectuer, lorsque la dérive temporelle mesurée correspond à ladite au moins une certaine avance ou à au moins une avance supérieure à cette dernière, une pluralité de transferts de premières charges électriques de la première capacité d'alimentation vers la deuxième capacité d'alimentation au cours d'une pluralité d'oscillations du résonateur mécanique.

3. Pièce d'horlogerie selon la revendication 1 ou 2, **caractérisée en ce que** le dispositif de régulation est également agencé pour pouvoir déterminer si la dérive temporelle mesurée correspond à au moins un certain retard ; **en ce que** ladite pompe de charge (60) est également agencée pour pouvoir transférer sur commande momentanément des charges électriques de ladite deuxième capacité d'alimentation vers ladite première capacité d'alimentation ; et **en ce que** le circuit logique (62) de commande de la pompe de charge est agencé de manière à activer la pompe de charge pour qu'elle effectue un transfert d'une deuxième charge électrique de la deuxième capacités d'alimentation vers la première capacité d'alimentation lorsque la dérive temporelle mesurée correspond audit au moins un certain retard.

4. Pièce d'horlogerie selon la revendication 3, **caractérisée en ce que** le circuit logique de commande est agencé de manière à pouvoir effectuer, lorsque la dérive temporelle mesurée correspond audit au moins un certain retard ou à au moins un retard supérieur à ce dernier, une pluralité de transferts de deuxièmes charges électriques de la deuxième capacité d'alimentation vers la première capacité d'alimentation au cours d'une pluralité d'oscillations du résonateur mécanique.

5. Pièce d'horlogerie selon une quelconque des revendications 1 à 4, **caractérisée en ce que** les première et deuxième capacités d'alimentation (C1, C2) ont sensiblement une même valeur de capacité et sont agencées pour alimenter conjointement ladite charge.

6. Pièce d'horlogerie selon une quelconque des revendications 1 à 5, **caractérisée en ce que** ladite charge agencée en sortie du convertisseur électrique comprend notamment ledit dispositif de régulation (8, 52) qui est alimenté par les première et deuxième capacités d'alimentation agencées de manière à délivrer une tension d'alimentation correspondant à l'addition des tensions respectives de ces première et deuxième capacités d'alimentation.

7. Pièce d'horlogerie selon la revendication 6, **caractérisée en ce que** le dispositif de freinage est agencé de manière que, dans chaque période d'oscillation de l'oscillateur mécanique lorsque ladite amplitude d'oscillation du résonateur mécanique est dans ladite plage de fonctionnement utile, un premier lobe (LU₁) du signal de tension induite présente une tension positive maximale (UM₁) pour la période d'oscillation considérée et un deuxième lobe (LU₂) de ce signal de tension induite présente une tension négative maximale (UM₂) pour cette période d'oscillation, et de manière que le premier lobe de tension et le deuxième lobe de tension interviennent, si ladite première polarité est positive alors que ladite deuxième polarité est négative, respectivement dans une première demi-alternance et une seconde demi-alternance d'une et/ou l'autre des deux alternances de l'oscillation considérée, et, si ladite première polarité est négative alors que ladite deuxième polarité est positive, respectivement dans une seconde demi-alternance et une première demi-alternance d'une et/ou l'autre des deux alternances de cette oscillation.

8. Pièce d'horlogerie selon la revendication 7, **caractérisée en ce que** l'ensemble électromagnétique comprend une structure aimantée formée dudit au moins un aimant et présentant au moins une paire de pôles magnétiques, de polarités respectives opposées, générant chacun un flux magnétique en direction d'un plan général de ladite au moins une bobine, cette paire de pôles magnétiques étant agencée de manière que leurs flux magnétiques respectifs traversent la bobine avec un décalage temporel mais avec en partie une simultanéité du flux magnétique entrant et du flux magnétique sortant, de manière à former lesdits premier et deuxième lobes de tension.

9. Pièce d'horlogerie selon la revendication 8, **caractérisée en ce que** l'ensemble électromagnétique (29) comprend une paire d'aimants bipolaires (22, 23) montés sur un balancier (18) du résonateur mécanique et ayant des axes d'aimantation respectifs avec des polarités opposées, cette paire d'aimants bipolaires définissant ladite paire de pôles magnétiques, ladite bobine étant solidaire d'un support du résonateur mécanique, un demi-axe médian (26) partant de l'axe de rotation du balancier et passant par le milieu de cette paire d'aimants définissant un demi-axe de référence (48) lorsque le résonateur est au repos et ainsi dans sa position neutre, la paire d'aimants et la bobine étant agencées de manière qu'une impulsion de tension induite générée entre les deux extrémités de la bobine au passage de la paire d'aimants en regard de cette bobine présente un lobe central avec une amplitude maximale résultant d'un couplage simultané des deux aimants de la paire d'aimants avec la bobine ; et **en ce que** la bobine présente en son centre un décalage angulaire (θ) relativement au demi-axe de référence de sorte que les deux lobes centraux engendrés dans chaque période d'oscillation du résonateur mécanique, dans ladite plage de fonctionnement utile, définissent lesdits premier et deuxième lobes du signal de tension induite.

10. Pièce d'horlogerie selon la revendication 9, **caractérisée en ce que** ledit décalage angulaire (θ) est compris entre 30° et 120° en valeur absolue.

11. Pièce d'horlogerie selon la revendication 9 ou 10 et dans laquelle ladite paire d'aimants bipolaires est une première paire (22A, 23A), ladite bobine est une première bobine (28A) et ledit décalage angulaire est un premier décalage angulaire ; **caractérisée en ce que** ledit ensemble électromagnétique comprend en outre au moins une deuxième paire d'aimants bipolaires (22B, 23B) montés sur ledit balancier à même distance radiale de l'axe de rotation que la première paires d'aimants bipolaires et ayant des axes d'aimantation respectifs avec des polarités opposées et une ouverture angulaire sensiblement identique à celle de la première paire d'aimants bipolaires, et au moins une deuxième bobine solidaire du support du résonateur mécanique et dont le centre présente avec l'axe de référence de la deuxième paire d'aimants bipolaires un deuxième décalage angulaire sensiblement identique au premier décalage angulaire ; **en ce que**, lorsque le résonateur est au repos, une des première et deuxième paires d'aimants bipolaires est située à égale distance angulaire des première et deuxième bobines, ledit ensemble électromagnétique comprenant soit une pluralité de bobines agencées de manière qu'un premier axe médian entre les première et deuxième paires d'aimants bipolaires définit un axe de symétrie pour cette pluralité de bobines, soit une pluralité de paires d'aimants bipolaires agencées de manière qu'un deuxième axe médian entre les première et deuxième bobines définit un axe de symétrie pour cette pluralité de paires d'aimants bipolaires ; et **en ce que** les divers éléments dudit ensemble électromagnétique sont agencés de manière que les tensions induites respectives dans les bobines en question s'additionnent constructivement.

12. Pièce d'horlogerie selon la revendication 11, **caractérisée en ce que** les premier et deuxième décalages angulaires ont chacun sensiblement une valeur égale à 90°, ledit ensemble électromagnétique comprenant seulement lesdites première et deuxième bobines décalées angulairement de 180° et seulement lesdites première et deuxième paires d'aimants bipolaires aussi décalées angulairement de 180°.

13. Pièce d'horlogerie selon la revendication 11, **caractérisée en ce que** ledit ensemble électromagnétique comprend lesdites première et deuxième bobines qui sont décalées angulairement de 120° et trois paires d'aimants bipolaires dont une est décalée de 120° avec chacune des deux autres.

14. Pièce d'horlogerie selon une quelconque des revendications précédentes, **caractérisée en ce que** l'ensemble électromagnétique forme également partiellement le dispositif de mesure.

15. Pièce d'horlogerie selon une quelconque des revendications 7 à 13, **caractérisée en ce que** le dispositif de régulation comprend un circuit (64) de détection d'un événement déterminé dans ledit signal de tension induite et un circuit temporisateur associé au circuit logique de commande qui est agencé pour activer ladite pompe de charge dans des zones temporelles hors de l'apparition des premier et deuxième lobes dudit signal de tension induite.

## Patentansprüche

1. Uhr (2), umfassend:
- einen Mechanismus,
- einen mechanischen Resonator (6), der geeignet ist, um eine neutrale Position zu schwingen, die seinem Zustand mit minimaler mechanischer potentieller Energie entspricht, wobei jede Schwingung des mechanischen Resonators eine Schwingungsperiode definiert und zwei aufeinander folgende Halbschwingungen aufweist, von denen jede zwischen zwei Extrempositionen liegt, die die Schwingungsamplitude des mechanischen Resonators definieren, wobei jede Halbschwingung einen Durchgang des mechanischen Resonators durch seine neutrale Position zu einem mittleren Zeitpunkt darstellt und aus einer ersten Viertelschwingung zwischen einem Anfangszeitpunkt dieser Halbschwingung und ihrem mittleren Zeitpunkt und aus einer zweiten Viertelschwingung zwischen diesem mittleren Zeitpunkt und einem Endzeitpunkt dieser Halbschwingung gebildet ist,
- eine Erhaltungsvorrichtung (14) des mechanischen Resonators, die mit diesem mechanischen Resonator einen mechanischen Oszillator bildet, der den Takt des Gangs des Mechanismus definiert,
- einen elektromechanischen Wandler, der dazu vorgesehen ist, die mechanische Leistung des mechanischen Oszillators in elektrische Leistung umzuwandeln, wenn der mechanische Resonator mit einer Amplitude in einem Nutzbetriebsbereich schwingt, wobei dieser elektromagnetische Wandler aus einer elektromagnetischen Baueinheit (29) gebildet ist, die mindestens eine Spule (28), die an einem Element der mechanischen Baueinheit montiert ist, die aus dem mechanischen Resonator und aus seinem Träger gebildet ist, und mindestens einen Magneten (22, 23) umfasst, der an dem anderen Element dieser mechanischen Baueinheit montiert ist, wobei die elektromagnetische Baueinheit dazu vorgesehen ist, ein Signal (Ui(t)) einer induzierten Spannung zwischen den beiden Ausgangsklemmen (E1, E2) des elektromechanischen Wandlers bereitzustellen, wenn der mechanische Resonator mit einer Amplitude in dem Nutzbetriebsbereich schwingt,
- einen elektrischen Wandler (56), der mit den beiden Ausgangsklemmen des elektromechanischen Wandlers derart verbunden ist, dass er von diesem elektromechanischen Wandler einen induzierten elektrischen Strom empfangen kann, wobei dieser elektrische Wandler eine Versorgungseinheit umfasst, die dazu vorgesehen ist, die von dem elektromechanischen Wandler gelieferte elektrische Energie zu akkumulieren, wobei dieser elektromechanische Wandler und der elektrische Wandler zusammen eine Bremsvorrichtung des mechanischen Resonators bilden,
- eine Ladungseinrichtung (54), die mit dem elektrischen Wandler verbunden ist oder ordnungsgemäß anschließbar ist, um durch die Versorgungseinheit versorgt zu werden,
- eine Vorrichtung (8, 52) zum Einstellen der Frequenz des mechanischen Oszillators, wobei diese Einstellvorrichtung einen Hilfsoszillator (58) und eine Messvorrichtung (64, CB) umfasst, die dazu vorgesehen ist, eine eventuelle zeitliche Abweichung des mechanischen Oszillators in Bezug auf den Hilfsoszillator detektieren zu können, wobei die Einstellvorrichtung dazu vorgesehen ist, festzustellen, ob die gemessene zeitliche Abweichung mindestens einer bestimmten Voreilung entspricht;
wobei die Uhr **dadurch gekennzeichnet ist, dass** die Versorgungseinheit eine erste Versorgungskapazität (C1) und eine zweite Versorgungskapazität (C2) umfasst, die beide dazu vorgesehen sind, die Ladungseinrichtung versorgen zu können, und der elektrische Wandler aus einer ersten elektrischen Energiespeicherschaltung, die die erste Versorgungskapazität umfasst und dazu vorgesehen ist, diese erste Versorgungskapazität (C1) ausschließlich mit einer Spannung, die eine erste Eingangspolarität des elektrischen Wandlers aufweist, wiederaufladen zu können, und aus einer zweiten elektrischen Energiespeicherschaltung gebildet ist, die die zweite Versorgungskapazität umfasst und dazu vorgesehen ist, diese zweite Versorgungskapazität (C2) ausschließlich mit einer Spannung, die eine zu der ersten Polarität entgegengesetzte zweite Polarität am Eingang des elektrischen Wandlers aufweist, wiederaufladen zu können, wobei die Bremsvorrichtung so beschaffen ist, dass eine Menge elektrischer Energie, die bei einer Wiederaufladung der ersten Versorgungskapazität bzw. der zweiten Versorgungskapazität geliefert wird, umso größer ist, je niedriger der Spannungspegel dieser ersten Versorgungskapazität bzw. dieser zweiten Versorgungskapazität ist; dass die Bremsvorrichtung so beschaffen ist, dass das Signal der induzierten Spannung in jeder Schwingungsperiode des mechanischen Oszillators dann, wenn die Schwingungsamplitude in dem Nutzbetriebsbereich liegt, mindestens ein erstes Intervall, das in den beiden ersten Viertelschwingungen liegt, in denen dieses Signal der induzierten Spannung die erste Polarität aufweist, und mindestens ein zweites Intervall aufweist, das in den beiden zweiten Viertelschwingungen liegt, in denen dieses Signal der induzierten Spannung die zweite Polarität aufweist, wobei die Bremsvorrichtung ferner so beschaffen ist, dass für jede Schwingung des mechanischen Resonators mit einer Amplitude in dem Nutzbetriebsbereich ein Wiederaufladen der ersten Versorgungskapazität gegebenenfalls insgesamt größtenteils in den beiden ersten Viertelschwingungen erfolgt und ein Wiederaufladen der zweiten Versorgungskapazität gegebenenfalls insgesamt größtenteils in den beiden zweiten Viertelschwingungen erfolgt; dass die Einstellvorrichtung eine Ladungspumpe (60) umfasst, die dazu vorgesehen ist, auf Befehl elektrische Ladungen von der ersten Versorgungskapazität an die zweite Versorgungskapazität zu übertragen; und dass die Einstellvorrichtung ferner eine Logikschaltung (62) zum Steuern der Ladungspumpe umfasst, die am Eingang ein von der Messvorrichtung geliefertes Messsignal empfängt und dazu vorgesehen ist, die Ladungspumpe zu aktivieren, damit sie eine Übertragung einer ersten elektrischen Ladung der ersten Versorgungskapazität an die zweite Versorgungskapazität ausführt, wenn die gemessene zeitliche Abweichung der mindestens einen bestimmten Voreilung entspricht.

2. Uhr nach Anspruch 1, **dadurch gekennzeichnet, dass** die Steuerlogikschaltung so angeordnet ist, dass sie während mehrerer Schwingungen des mechanischen Resonators mehrere Übertragungen erster elektrischer Ladungen von der ersten Versorgungskapazität zu der zweiten Versorgungskapazität ausführen kann, wenn die gemessene zeitliche Abweichung der mindestens einen bestimmten Voreilung oder mindestens einer Voreilung größer als diese Letztere entspricht.

3. Uhr nach Anspruch 1 oder 2, **dadurch gekennzeichnet, dass** die Einstellvorrichtung ferner dazu vorgesehen ist, bestimmen zu können, ob die gemessene zeitliche Abweichung mindestens einer bestimmten Nacheilung entspricht; dass die Ladungspumpe (60) ferner dazu vorgesehen ist, auf Befehl sofort elektrische Ladungen von der zweiten Versorgungskapazität an die erste Versorgungskapazität übertragen zu können; und dass die Steuerlogikschaltung (62) der Ladungspumpe so angeordnet ist, dass sie die Ladungspumpe aktiviert, damit sie eine Übertragung einer zweiten elektrischen Ladung von der zweiten Versorgungskapazität an die erste Versorgungskapazität ausführt, wenn die gemessene zeitliche Abweichung der mindestens einen bestimmten Nacheilung entspricht.

4. Uhr nach Anspruch 3, **dadurch gekennzeichnet, dass** die Steuerlogikschaltung dazu vorgesehen ist, während mehrerer Schwingungen des mechanischen Resonators mehrere Übertragungen zweiter elektrischer Ladungen von der zweiten Versorgungskapazität an die erste Versorgungskapazität auszuführen, wenn die gemessene zeitliche Abweichung der mindestens einen bestimmten Nacheilung oder mindestens einer Nacheilung größer als diese Letztere entspricht.

5. Uhr nach einem der Ansprüche 1 bis 4, **dadurch gekennzeichnet, dass** die erste und die zweite Versorgungskapazität (C1, C2) im Wesentlichen den gleichen Kapazitätswert besitzen und so angeordnet sind, dass sie die Ladungseinrichtung gemeinsam versorgen können.

6. Uhr nach einem der Ansprüche 1 bis 5, **dadurch gekennzeichnet, dass** die am Ausgang des elektrischen Wandlers angeordnete Ladungseinrichtung insbesondere die Einstellvorrichtung (8, 52) umfasst, die von der ersten und der zweiten Versorgungskapazität versorgt wird, die so angeordnet sind, dass sie eine Versorgungsspannung liefern, die der Summe der jeweiligen Spannungen dieser ersten und zweiten Versorgungskapazität entspricht.

7. Uhr nach Anspruch 6, **dadurch gekennzeichnet, dass** die Bremsvorrichtung so beschaffen ist, dass in jeder Schwingungsperiode des mechanischen Oszillators dann, wenn die Schwingungsamplitude des mechanischen Resonators in dem Nutzbetriebsbereich liegt, eine erste Keule (LU₁) des Signals der induzierten Spannung eine maximale positive Spannung (UM₁) für die betrachtete Schwingungsperiode aufweist und eine zweite Keule (LU₂) dieses Signals der induzierten Spannung eine maximale negative Spannung (UM₂) für diese Schwingungsperiode aufweist, und derart, dass die erste Spannungskeule und die zweite Spannungskeule dann, wenn die erste Polarität positiv ist, während die zweite Polarität negativ ist, in einer ersten Viertelschwingung bzw. einer zweiten Viertelschwingung der einen und/oder der anderen der beiden Halbschwingungen der betrachteten Schwingung auftreten, und dann, wenn die erste Polarität negativ ist, während die zweite Polarität positiv ist, in einer zweiten Viertelschwingung bzw. einer ersten Viertelschwingung der einen und/oder der anderen der beiden Halbschwingungen dieser Schwingung auftreten.

8. Uhr nach Anspruch 7, **dadurch gekennzeichnet, dass** die elektromagnetische Baueinheit eine magnetisierte Struktur umfasst, die aus dem mindestens einen Magneten gebildet ist und mindestens ein Paar magnetischer Pole mit jeweils entgegengesetzten Polaritäten aufweist, die jeweils einen magnetischen Fluss in Richtung einer allgemeinen Ebene der mindestens einen Spule erzeugen, wobei dieses Paar magnetischer Pole so angeordnet ist, dass ihre jeweiligen magnetischen Flüsse die Spule mit einer zeitlichen Verzögerung, jedoch mit einer teilweisen Gleichzeitigkeit des eintretenden magnetischen Flusses und des austretenden magnetischen Flusses durchlaufen, derart, dass die ersten bzw. zweiten Spannungskeulen gebildet werden.

9. Uhr nach Anspruch 8, **dadurch gekennzeichnet, dass** die elektromagnetische Baueinheit (29) ein Paar Bipolarmagnete (22, 23) umfasst, die an einer Unruh (18) des mechanischen Resonators montiert sind und jeweilige Magnetisierungsachsen mit entgegengesetzten Polaritäten besitzen, wobei dieses Paar Bipolarmagnete das Paar magnetischer Pole definiert, die Spule mit einem Träger des mechanischen Resonators fest verbunden ist und eine Mittelhalbachse (26) von der Drehachse der Unruh ausgeht und durch die Mitte dieses Paars von Magneten verläuft, die eine Bezugshalbachse (48) definieren, wenn der Resonator in Ruhe und somit in seiner neutralen Position ist, wobei das Paar von Magneten und die Spule so beschaffen sind, dass ein induzierter Spannungsimpuls, der zwischen den beiden Enden der Spule beim Passieren des Paars von Magneten an dieser Spule erzeugt wird, eine Mittelkeule mit einer maximalen Amplitude aufweist, der aus einer gleichzeitigen Kopplung der beiden Magneten des Paars von Magneten mit der Spule resultiert; und dass die Spule in ihrer Mitte einen relativen Winkelversatz (θ) zu der Bezugshalbachse aufweist, derart, dass die beiden in jeder Schwingungsperiode des mechanischen Resonators erzeugten Mittelkeulen in dem Nutzbetriebsbereich die erste und die zweite Keule des Signals der induzierten Spannung definieren.

10. Uhr nach Anspruch 9, **dadurch gekennzeichnet, dass** der Absolutwert des Winkelversatzes (θ) im Bereich von 30° und 120° liegt.

11. Uhr nach Anspruch 9 oder 10, bei der das Paar Bipolarmagnete ein erstes Paar (22A, 23A) ist, die Spule eine erste Spule (28A) ist und der Winkelversatz ein erster Winkelversatz ist; **dadurch gekennzeichnet, dass** die elektromagnetische Baueinheit ferner mindestens ein zweites Paar Bipolarmagnete (22B, 23B) umfasst, die an der Unruh im gleichen radialen Abstand von der Drehachse wie das erste Paar Bipolarmagnete montiert ist und jeweilige Magnetisierungsachsen mit entgegengesetzten Polaritäten und einer Winkelöffnung besitzt, die mit jener des ersten Paars Bipolarmagnete im Wesentlichen identisch ist, und mindestens eine zweite Spule umfasst, die mit dem Träger des mechanischen Resonators fest verbunden ist und deren Mitte mit der Referenzachse des zweiten Paars Bipolarmagnete einen zweiten Winkelversatz aufweist, der mit dem ersten Winkelversatz im Wesentlichen identisch ist; dass dann, wenn der Resonator in Ruhe ist, eines des ersten und des zweiten Paars Bipolarmagnete sich im gleichen Winkelabstand von der ersten und der zweiten Spule befindet, wobei die elektromagnetische Baueinheit entweder mehrere Spulen, die so angeordnet sind, dass eine erste Mittelachse zwischen dem ersten und dem zweiten Paar Bipolarmagnete eine Symmetrieachse für diese mehreren Spulen definiert, oder mehrere Paare Bipolarmagnete umfasst, die so angeordnet sind, dass eine zweite Mittelachse zwischen den ersten und den zweiten Spulen eine Symmetrieachse für diese mehreren Paare Bipolarmagnete definiert; und dass die verschiedenen Elemente der elektromagnetischen Baueinheit so angeordnet sind, dass sich die jeweiligen induzierten Spannungen in den fraglichen Spulen konstruktiv addieren.

12. Uhr nach Anspruch 11, **dadurch gekennzeichnet, dass** der erste und der zweite Winkelversatz jeweils im Wesentlichen einen Wert von 90° aufweisen, wobei die elektromagnetische Baueinheit nur die ersten und zweiten Spulen, die um 180° winkelversetzt sind, und nur die ersten und zweiten Paare Bipolarmagnete umfasst, die ebenfalls um 180° winkelversetzt sind.

13. Uhr nach Anspruch 11, **dadurch gekennzeichnet, dass** die elektromagnetische Baueinheit eine erste und eine zweite Spule, die um 120° winkelversetzt sind, und drei Paare Bipolarmagnete umfasst, von denen eines zu den jeweils zwei anderen um 120° versetzt ist.

14. Uhr nach einem der vorhergehenden Ansprüche, **dadurch gekennzeichnet, dass** die elektromagnetische Baueinheit ferner teilweise die Messvorrichtung bildet.

15. Uhr nach einem der Ansprüche 7 bis 13, **dadurch gekennzeichnet, dass** die Einstellvorrichtung eine Schaltung (64) für die Detektion eines bestimmten Ereignisses in dem Signal der induzierten Spannung und eine der Steuerlogikschaltung zugeordnete Verzögerungsschaltung umfasst, die dazu vorgesehen ist, die Ladungspumpe in den Zeitzonen außerhalb des Auftretens der ersten und der zweiten Keule des Signals der induzierten Spannung zu aktivieren.

## Claims

1. Timepiece (2), comprising:
- a mechanism,
- a mechanical resonator (6) suitable for oscillating about a neutral position corresponding to the minimal mechanical potential energy state thereof, each oscillation of the mechanical resonator defining an oscillation period and having two successive alternations each between two extreme positions which define the oscillation amplitude of the mechanical resonator, each alternation having a passage of the mechanical resonator via the neutral position thereof at a median time and consisting of a first half-alternation between an initial time of this alternation and the median time thereof and a second half-alternation between this median time and an end time of this alternation,
- a maintenance device (14) of the mechanical resonator forming with this mechanical oscillator a mechanical oscillator which defines the running speed of said mechanism,
- an electromechanical transducer arranged to be able to convert mechanical power from the mechanical oscillator into electrical power when the mechanical resonator oscillates with an amplitude in an effective functioning range, this electromagnetic transducer being formed by an electromagnetic assembly (29) comprising at least one coil (28), mounted on an element from the mechanical assembly consisting of the mechanical resonator and the support thereof, and at least one magnet (22, 23) mounted on the other element of this mechanical assembly, the electromagnetic assembly being arranged so as to be able to supply an induced voltage signal (Ui(t)) between the two output terminals (E1, E2) of the electromechanical transducer when the mechanical resonator oscillates with an amplitude in said effective functioning range,
- an electric converter (56) connected to the two output terminals of the electromechanical transducer so as to be able to receive an induced electric current from this electromechanical transducer, this electric converter comprising a power supply unit arranged to be able to store the electrical energy supplied by the electromechanical transducer, this electromechanical transducer and the electric converter forming a braking device of the mechanical resonator together,
- a load (54) connected or suitable for being regularly connected to the electric converter so as to be able to be powered by the power supply unit,
- a device (8, 52) for regulating the frequency of the mechanical oscillator, this regulating device comprising an auxiliary oscillator (58) and a measuring device (64, CB) arranged to be able to detect a potential time drift of the mechanical oscillator relative to the auxiliary oscillator, the regulating device being arranged to be able to determine whether the time drift measured corresponds to at least one certain gain;
the timepiece being **characterized in that** the power supply unit comprises a first power supply capacitor (C1) and a second power supply capacitor (C2), both arranged to be able to power said load, and the electric converter is formed by a first electrical energy storage circuit, which comprises the first power supply capacitor and which is arranged to be able to recharge this first power supply capacitor (C1) merely with a voltage having a first polarity at the input of the electric converter, and by a second electrical energy storage circuit which comprises the second power supply capacitor and which is arranged to be able to recharge this second power supply capacitor (C2) merely with a voltage having a second polarity, opposite the first polarity, at the input of the electric converter, the braking device being arranged such that a quantity of electrical energy supplied during recharging to the first power supply capacitor, respectively to the second power supply capacitor increases as the voltage level of this first power supply capacitor, respectively of this second power supply capacitor lowers; **in that** the braking device is arranged such that said induced voltage signal has in each oscillation period of the mechanical oscillator, when said oscillation amplitude is included in the effective functioning range, at least one first interval, situated in the two first half-alternations, wherein this induced voltage signal has said first polarity and at least one second interval, situated in the two second half-alternations, wherein this induced voltage signal has said second polarity, the braking device being further arranged such that, for each oscillation of the mechanical transducer with an amplitude in said effective functioning range, recharging of the first power supply capacitor, as applicable, takes place mostly generally in the two first half-alternations and recharging of the second power supply capacitor, as applicable, takes place mostly generally in the two second half-alternations; **in that** the regulating device comprises a load pump (60) arranged to be able to transfer on request electric loads from the first power supply capacitor to the second power supply capacitor; and **in that** the regulating device further comprises a logic circuit (62) for controlling the load pump which receives as an input a measurement signal supplied by the measuring device and which is arranged so as to activate the load pump so that it transfers a first electric load from the first power supply capacitor to second power supply capacitor when the time drift measured corresponds to said at least one certain gain.

2. Timepiece according to claim 1, **characterized in that** the logic control circuit is arranged so as to be able to perform, when the time drift measured corresponds to said at least one certain gain or to at least one gain greater than the latter, a plurality of transfers of first electric loads from the first power supply capacitor to the second power supply capacitor during a plurality of oscillations of the mechanical resonator.

3. Timepiece according to claim 1 or 2, **characterized in that** the regulating device is also arranged to be able to determine whether the time drift measured corresponds to at least one certain loss; **in that** said load pump (60) is also arranged to be able to transfer on request momentarily electric loads from said second power supply capacitor to said first power supply capacitor; and **in that** the logic control circuit (62) of the load pump is arranged so as to activate the load pump is arranged so as to activate the load pump so that it performs a transfer of a second electric load from the second power supply capacitor to the first power supply capacitor when the time drift measured corresponds to said at least one certain loss.

4. Timepiece according to claim 3, **characterized in that** the logic control circuit is arranged so as to be able to perform, when the time drift measured corresponds to said at least one certain loss or to at least one loss greater than the latter, a plurality of transfers of second electric loads from the second power supply capacitor to the first power supply capacitor during a plurality of oscillations of the mechanical resonator.

5. Timepiece according to any one of claims 1 to 4, **characterized in that** the first and second power supply capacitors (C1, C2) have substantially the same capacity value and are arranged to power said load jointly.

6. Timepiece according to any one of claims 1 to 5, **characterized in that** said load arranged at the output of the electric converter particularly comprises said regulating device (8, 52) which is powered by the first and second power supply capacitors arranged so as to deliver a power supply voltage corresponding to the sum of the respective voltages of these first and second power supply capacitors.

7. Timepiece according to claim 6, **characterized in that** the braking device is arranged such that, in each oscillation period of the mechanical oscillator when said oscillation period of the mechanical resonator is in said effective functioning range, a first lobe (LU₁) of the induced voltage signal exhibits a maximum positive voltage (UM₁) for the oscillation period in question and a second lobe (LU₂) of this induced voltage signal exhibits a maximum negative voltage (UM₂) for this oscillation period, and such that the first voltage lobe and the second voltage lobe occur, if said first polarity is positive while said second polarity is negative, respectively in a first half-alternation and a second half-alternation of one and/or the other of the two alternations of the oscillation in question, and, if said first polarity is negative while said second polarity is positive, respectively in a second half-alternation and a first half-alternation of one and/or the other of the two alternations of this oscillation in question.

8. Timepiece according to claim 7, **characterized in that** the electromagnetic assembly comprises a magnetized structure formed from at least one magnet and having at least one pair of magnetic poles, of opposite respective polarities, each generating a magnetic flux in the direction of a general plane of said at least one coil, this pair of magnetic poles being arranged such that the respective magnetic fluxes thereof pass through the coil with a time-lag but with at least in part a simultaneity of the incoming magnetic flux and the outgoing magnetic flux, so as to form said first and second voltage lobes.

9. Timepiece according to claim 8, **characterized in that** the electromagnetic assembly (29) comprises a pair of bipolar magnets (22, 23) mounted on a balance (18) of the mechanical resonator and having respective magnetization axes with opposite polarities, this pair of bipolar magnets defining said pair of magnetic poles, said coil being rigidly connected to a support of the mechanical resonator, a median half-axis (26) starting from the axis of rotation of the balance and passing via the midpoint of this pair of magnets defining a reference half-axis (48) when the resonator is resting and thus in the neutral position thereof, the pair of magnets and the coil being arranged such that an induced voltage pulse generated between the two ends of the coil at the passage of the pair of magnets facing this coil exhibits a central lobe with a maximum amplitude resulting from simultaneous coupling of the two magnets of the pair of magnets with the coil; and **in that** the coil has at the center thereof an angular lag (θ) relative to the reference half-axis such that the two central lobes induced in each oscillation period of the mechanical resonator, in said effective functioning range, define said first and second lobes of the induced voltage signal.

10. Timepiece according to claim 9, **characterized in that** said angular lag (θ) is between 30° and 120° in absolute values.

11. Timepiece according to claim 9 or 10 and wherein said pair of bipolar magnets is a first pair (22A, 23A), said coil is a first coil (28A) and said angular lag is a first angular lag; **characterized in that** said electromagnetic assembly further comprises at least one second pair of bipolar magnets (22B, 23B) mounted on said balance at the same radial distance from the axis of rotation as the first pairs of bipolar magnets and having respective axes of magnetization with opposite polarities and an angular opening substantially identical to that of the first pair of bipolar magnets, and at least one second coil rigidly connected to the support of the mechanical resonator and wherein the center exhibits with the reference axis of the second pair of bipolar magnets a second angular lag substantially identical to the first angular lag; **in that**, when the resonator is resting, one of the first and second pairs of bipolar magnets is situated at equal angular distance from the first and second coils, said electromagnetic assembly comprising either a plurality of coils arranged such that a first median axis between the first and second pairs of bipolar magnets defines an axis of symmetry for this plurality of coils, or a plurality of pairs of bipolar magnets arranged such that a second median axis defines an axis of symmetry for this plurality of bipolar magnets; and **in that** the various elements of said electromagnetic assembly are arranged such that the respective induced voltages in the coils in question are added together constructively.

12. Timepiece according to claim 11, **characterized in that** the first and second angular lags each have substantially a value equal to 90°, said electromagnetic assembly comprising merely said first and second coils out of step by an angle of 180° and merely said first and second pairs of bipolar magnets also out of step by an angle of 180°.

13. Timepiece according to claim 11, **characterized in that** said electromagnetic assembly comprises said first and second coils which are out of step by an angle of 120° and three pairs of bipolar magnets one whereof is out of step by 120° with each of the two others.

14. Timepiece according to any one of the preceding claims, **characterized in that** the electromagnetic assembly also partially forms the measuring device.

15. Timepiece according to any one of claims 7 to 13, **characterized in that** the regulation device comprises a circuit (64) for detecting a predetermined event in said induced voltage signal and a timer circuit associated with the logic control circuit which is arranged to activate said load pump in time zones outside the appearance of the first and second lobes of the induced voltage signal.
